# EUROPEAN PATENT APPLICATION

(11) **EP 4 815 348 A1**
(43) Date of publication of application: **30.09.2026**
(21) Application number: 24906080.7
(22) Date of filing: 03.12.2024
(51) Int. Cl.: H04L 1/00

(54) **INTERLEAVING METHOD AND COMMUNICATION APPARATUS**

(30) Priority: 22.12.2023 CN 202311788453
(71) Applicant: Huawei Technologies Co., Ltd., Shenzhen, Guangdong 518129 (CN)
(72) Inventor: TONG, Jiajie, Shenzhen, Guangdong 518129 (CN); WANG, Xianbin, Shenzhen, Guangdong 518129 (CN); ZHANG, Huazi, Shenzhen, Guangdong 518129 (CN); QIN, Kangjian, Shenzhen, Guangdong 518129 (CN); LIU, Ke, Shenzhen, Guangdong 518129 (CN); WANG, Jun, Shenzhen, Guangdong 518129 (CN)
(74) Representative: Körber, Martin Hans
(86) International application number: PCT/CN2024/136439
(87) International publication number: WO 2025/130595

(57) **Abstract**

An interleaving method and a communication apparatus are provided. In the method, a transmitter device performs sub-block interleaving on a to-be-interleaved codeword sequence, to obtain a first codeword sequence (S410). Both the to-be-interleaved codeword sequence and the first codeword sequence include Y sub-blocks, and Y sub-blocks in the to-be-interleaved codeword sequence are determined based on a preset quantity X of bits included in one sub-block, where both X and Y are integers greater than 1. Then, the transmitter device performs, in a corresponding sub-block group, inter-sub-block bit interleaving on bits included in at least one sub-block group of L sub-block groups, to obtain a second codeword sequence (S420). The L sub-block groups are determined based on Y sub-blocks in the first codeword sequence and a preset quantity Z of sub-blocks included in one sub-block group, where both Z and L are integers greater than 1. According to the method, hardware overheads required for interleaving can be reduced, and a throughput can be improved.

## Description

This application claims priority to Chinese Patent Application No. 202311788453.0, filed with the China National Intellectual Property Administration on December 22, 2023 and entitled "INTERLEAVING METHOD AND COMMUNICATION APPARATUS", which is incorporated herein by reference in its entirety.

### TECHNICAL FIELD

This application relates to the field of channel coding, and more specifically, to an interleaving method and a communication apparatus.

### BACKGROUND

In a current channel bit interleaving solution, to implement a random process, interleaving is usually performed in a large range on an entire transmitted codeword. However, this interleaving manner has a large interleaving range and is irregular, and an interleaving process consumes a lot of hardware resources. In addition, this interleaving manner affects a throughput. Therefore, this interleaving manner is not suitable for a channel bit interleaving solution of a next-generation communication system.

### SUMMARY

This application provides an interleaving method and a communication apparatus, to reduce hardware overheads required for interleaving and improve a throughput.

According to a first aspect, an interleaving method is provided. The method may be performed by a transmitter device. Unless otherwise specified, the "transmitter device" in this application may be the transmitter device (for example, a network device or a terminal device), or may be a component (for example, a processor, a chip, or a chip system) in the transmitter device, or may be a logical module or software that can implement all or some functions of the transmitter device.

The method includes: performing sub-block interleaving on a to-be-interleaved codeword sequence, to obtain a first codeword sequence, where both the to-be-interleaved codeword sequence and the first codeword sequence include Y sub-blocks, and Y sub-blocks in the to-be-interleaved codeword sequence are determined based on a preset quantity X of bits included in one sub-block, where both X and Y are integers greater than 1; and performing, in a corresponding sub-block group, inter-sub-block bit interleaving on bits included in at least one sub-block group of L sub-block groups, to obtain a second codeword sequence, where the L sub-block groups are determined based on Y sub-blocks in the first codeword sequence and a preset quantity Z of sub-blocks included in one sub-block group, where both Z and L are integers greater than 1.

In the foregoing technical solution, an interleaving process of the to-be-interleaved codeword sequence is divided into two steps. A first step is sub-block interleaving, and originally aggregated bit locations are distributed to different locations in a transmit sequence in a large range through sub-block interleaving; and a second step is performing inter-sub-block bit interleaving in a small range in a sub-block group including a plurality of sub-blocks, so that a correlation between consecutive bits is broken. In this case, a degree of parallelism (that is, a throughput) can be improved through sub-block interleaving in a large range, and the inter-sub-block bit interleaving in a small range in a sub-block group can be obtained based on a fixed interconnection relationship, and hardware implementation is easy (that is, required hardware overheads are low). In this way, a problem of irregular de-interleaving caused by small-granularity bit interleaving performed in a large range in original interleaving is resolved, the degree of parallelism cannot be improved, and hardware overheads are high.

In some implementations of the first aspect, performing, in the corresponding sub-block group, inter-sub-block bit interleaving on the bits included in the at least one sub-block group of the L sub-block groups includes: performing, in a first sub-block group in a first interleaving manner, inter-sub-block bit interleaving on bits included in the first sub-block group in the at least one sub-block group, where the first sub-block group includes a first sub-block and a second sub-block, the first interleaving manner is used to place a first bit included in the first sub-block at a first location, and the first location is a location of a second bit included in the second sub-block.

In the foregoing technical solution, the first bit included in the first sub-block in the first sub-block group is exchanged from the current location to the location of the bit in the second sub-block, to implement inter-sub-block bit interleaving in the sub-block group. In some implementations of the first aspect, a remainder obtained after a modulo n operation is performed on a location index of the first bit is the same as a remainder obtained after the modulo n operation is performed on a location index of the second bit, where n is an integer greater than 1.

For example, n is a prime number greater than 1.

The foregoing technical solution may be considered as a first interleaving manner in which bits in a sub-block group are interleaved based on locations congruent modulo n. A location index S of a bit (for example, the first bit or the second bit) in the first sub-block group indicates that the bit is an S^{th} bit in all bits in the first sub-block group.

Optionally, offset values corresponding to all bits in the first sub-block may be the same or may be different. This is not limited in this application. For example, if a remainder obtained after the modulo n operation is performed on location indexes of a plurality of bits in the first sub-block group is the same as a remainder obtained after the modulo n operation is performed on the location index of the first bit, the first bit may be shifted to a location of any one of the plurality of bits.

In some implementations of the first aspect, performing sub-block interleaving on the to-be-interleaved codeword sequence includes: performing sub-block interleaving on the to-be-interleaved codeword sequence in a second interleaving manner, where the second interleaving manner is used to write every $\left⌈Y/d1\right⌉$ sub-blocks in the Y sub-blocks in the to-be-interleaved codeword sequence by column and read the Y sub-blocks by row to complete sub-block interleaving, where d1 is a quantity of written columns corresponding to the second interleaving manner, d1 is an integer greater than 1 and less than Y, and ┌ ┐ indicates rounding up.

For example, d1 is a prime number greater than 1 and less than Y, so that interleaving can more thoroughly mix coupling between decoding.

For example, Z is equal to d1.

In the foregoing technical solution, block interleaving is implemented in a column-in-row-out interleaving manner, which is easy to use and has high operability.

In some implementations of the first aspect, performing sub-block interleaving on the to-be-interleaved codeword sequence includes: performing sub-block interleaving on the to-be-interleaved codeword sequence in a third interleaving manner, where the third interleaving manner is used to write every d2 sub-blocks in the Y sub-blocks in the to-be-interleaved codeword sequence by row and read the Y sub-blocks by column to complete sub-block interleaving, where d2 is a quantity of written columns corresponding to the third interleaving manner, and d2 is an integer greater than 1 and less than Y.

For example, d2 is a prime number greater than 1 and less than Y, so that interleaving can more thoroughly mix coupling between decoding.

In the foregoing technical solution, block interleaving is implemented in a row-in-column-out interleaving manner, which is easy to use and has high operability.

In some implementations of the first aspect, sub-blocks included in any one of the L sub-block groups are consecutive sub-blocks in the Y sub-blocks in the first codeword sequence.

In some implementations of the first aspect, the third interleaving manner is further used to perform, in a corresponding sub-block group between row-based writing and column-based reading, sub-block interleaving on at least one sub-block group of d2 sub-block groups, and the d2 sub-block groups are sub-block groups corresponding to d2 columns of sub-blocks that are written by row.

In some implementations of the first aspect, the L sub-block groups are sub-block groups obtained through row-based reading after sub-block interleaving is performed in the corresponding sub-block group.

For example, Z is equal to d2.

In some implementations of the first aspect, that the third interleaving manner is used to perform, in the corresponding sub-block group, sub-block interleaving on the at least one sub-block group of the d2 sub-block groups includes: The third interleaving manner is used to perform, in the corresponding sub-block group by translating a sub-block in a column direction, sub-block interleaving on the at least one sub-block group of the d2 sub-block groups.

In the foregoing technical solution, complexity of interleaving is not increased, so that an interleaving result is more even.

According to a second aspect, a de-interleaving method is provided. The method may be performed by a receiver device. Unless otherwise specified, the "receiver device" in this application may be the receiver device (for example, a network device or a terminal device), or may be a component (for example, a processor, a chip, or a chip system) in the receiver device, or may be a logical module or software that can implement all or some functions of the receiver device.

The method includes: performing, in a corresponding sub-block group, inter-sub-block bit de-interleaving on decoded information included in at least one sub-block group of L sub-block groups, to obtain a first de-interleaved sequence, where the L sub-block groups are determined based on Y sub-blocks in a to-be-de-interleaved sequence and a preset quantity Z of sub-blocks included in one sub-block group, and the Y sub-blocks are determined based on a preset quantity X of pieces of decoded information included in one sub-block, where X, Y, Z, and L are all integers greater than 1; and performing sub-block de-interleaving on the first de-interleaved sequence, to obtain a second de-interleaved sequence.

In some implementations of the second aspect, performing, in the corresponding sub-block group, inter-sub-block bit de-interleaving on the decoded information included in the at least one sub-block group of the L sub-block groups includes: performing, in a first sub-block group in a first de-interleaving manner, inter-sub-block bit de-interleaving on decoded information included in the first sub-block group in the at least one sub-block group, where the first sub-block group includes a first sub-block and a second sub-block, the first de-interleaving manner is used to place first decoded information included in the second sub-block at a second location, and the second location is a location of second decoded information in the first sub-block.

In some implementations of the second aspect, a remainder obtained after a modulo n operation is performed on a location index of the first decoded information is the same as a remainder obtained after the modulo n operation is performed on a location index of the second decoded information, where n is an integer greater than 1.

In some implementations of the second aspect, performing sub-block de-interleaving on the first de-interleaved sequence includes:
performing sub-block de-interleaving on the first de-interleaved sequence in a second de-interleaving manner, where the second de-interleaving manner is used to write Y sub-blocks in the first de-interleaved sequence by row and read the Y sub-blocks by column to complete sub-block de-interleaving, d1 is a quantity of written columns corresponding to the second de-interleaving manner, and a quantity of sub-blocks written in each row is determined in a column-in-row-out interleaving manner of a modulo d1, where d1 is an integer greater than 1 and less than Y.

In some implementations of the second aspect, Z is equal to d1.

In some implementations of the second aspect, performing sub-block de-interleaving on the first de-interleaved sequence includes: performing sub-block de-interleaving on the first de-interleaved sequence in a third de-interleaving manner, where the third de-interleaving manner is used to write Y sub-blocks in the first de-interleaved sequence by column and read the Y sub-blocks by row to complete sub-block de-interleaving, d2 is a quantity of columns written corresponding to the third de-interleaving manner, and a quantity of sub-blocks written in each column is determined in a row-in-column-out interleaving manner of a modulo d2, where d2 is an integer greater than 1 and less than Y.

In some implementations of the second aspect, sub-blocks included in any one of the L sub-block groups are consecutive sub-blocks in the Y sub-blocks in the to-be-de-interleaved sequence.

In some implementations of the second aspect, the third de-interleaving manner is further used to perform, in a corresponding sub-block group, sub-block de-interleaving on at least one sub-block group of d2 sub-block groups between column-based writing and row-based reading, and the d2 sub-block groups are sub-block groups corresponding to d2 columns of sub-blocks that are written by column.

In some implementations of the second aspect, the L sub-block groups are sub-block groups obtained through row-based reading before sub-block de-interleaving is performed in the corresponding sub-block group.

For example, Z is equal to d2.

In some implementations of the second aspect, that the third de-interleaving manner is used to perform, in the corresponding sub-block group, sub-block de-interleaving on the at least one sub-block group of the d2 sub-block groups includes: The third de-interleaving manner is used to perform, in the corresponding sub-block group by translating a sub-block in a column direction, sub-block de-interleaving on the at least one sub-block group of the d2 sub-block groups.

According to a third aspect, an interleaving method is provided. The method may be performed by a transmitter device. Unless otherwise specified, the "transmitter device" in this application may be the transmitter device (for example, a network device or a terminal device), or may be a component (for example, a processor, a chip, or a chip system) in the transmitter device, or may be a logical module or software that can implement all or some functions of the transmitter device.

The method includes: performing, in a corresponding sub-block group, inter-sub-block bit interleaving on bits included in at least one sub-block group of L sub-block groups, to obtain a third codeword sequence, where the L sub-block groups are determined based on Y sub-blocks in a to-be-interleaved codeword sequence and a preset quantity Z of sub-blocks included in one sub-block group, and the Y sub-blocks are determined based on a preset quantity X of bits included in one sub-block, where X, Y, Z, and L are all integers greater than 1; and performing sub-block interleaving on Y sub-blocks in the third codeword sequence, to obtain a fourth codeword sequence.

In the foregoing technical solution, an interleaving process of the to-be-interleaved codeword sequence is divided into two steps. A first step is performing inter-sub-block bit interleaving in a small range in a sub-block group to break a correlation between consecutive bits. A second step is sub-block interleaving, and originally aggregated bit locations are distributed to different locations in a transmit sequence in a large range through block interleaving. In this case, a degree of parallelism can be improved through sub-block interleaving in a large range, and the inter-sub-block bit interleaving in a small range in a sub-block group can be obtained based on a fixed interconnection relationship, and hardware implementation is easy. In this way, a problem of irregular de-interleaving caused by small-granularity bit interleaving performed in a large range in original interleaving is resolved, the degree of parallelism cannot be improved, and hardware overheads are high.

In some implementations of the third aspect, performing, in the corresponding sub-block group, inter-sub-block bit interleaving on the bits included in the at least one sub-block group of the L sub-block groups includes: performing, in a first sub-block group in a first interleaving manner, inter-sub-block bit interleaving on bits included in the first sub-block group in the at least one sub-block group, where the first sub-block group includes a first sub-block and a second sub-block, the first interleaving manner is used to place a first bit included in the first sub-block at a first location, and the first location is a location of a second bit included in the second sub-block.

For beneficial effect of the implementations of the third aspect, refer to the descriptions of the first aspect. Details are not described herein again.

In some implementations of the third aspect, a remainder obtained after a modulo n operation is performed on a location index of the first bit is the same as a remainder obtained after the modulo n operation is performed on a location index of the second bit, where n is an integer greater than 1.

In some implementations of the third aspect, performing sub-block interleaving on the Y sub-blocks in the third codeword sequence includes: performing sub-block interleaving on the Y sub-blocks in the third codeword sequence in a third interleaving manner, where the third interleaving manner is used to write every d2 sub-blocks in Y sub-blocks in the third codeword sequence by row and read the Y sub-blocks by column to complete sub-block interleaving, where d2 is a quantity of to-be-written columns corresponding to the third interleaving manner, and d2 is an integer greater than 1 and less than Y.

For example, Z is equal to d2.

In some implementations of the third aspect, performing sub-block interleaving on the Y sub-blocks in the third codeword sequence includes: performing sub-block interleaving on the Y sub-blocks in the third codeword sequence in a second interleaving manner, where the second interleaving manner is used to write every $\left⌈Y/d1\right⌉$ sub-blocks in the Y sub-blocks in the third codeword sequence by column and read the Y sub-blocks by row to complete sub-block interleaving, where d1 is a quantity of written columns corresponding to the second interleaving manner, d1 is an integer greater than 1 and less than Y, and ┌ ┐ indicates rounding up.

In some implementations of the third aspect, sub-blocks included in any one of the L sub-block groups are consecutive sub-blocks in the Y sub-blocks in the to-be-interleaved codeword sequence.

According to a fourth aspect, a de-interleaving method is provided. The method may be performed by a receiver device. Unless otherwise specified, the "receiver device" in this application may be the receiver device (for example, a network device or a terminal device), or may be a component (for example, a processor, a chip, or a chip system) in the receiver device, or may be a logical module or software that can implement all or some functions of the receiver device.

The method includes: performing sub-block de-interleaving on a to-be-de-interleaved sequence, to obtain a third de-interleaved sequence, where both the to-be-de-interleaved sequence and the third de-interleaved sequence include Y sub-blocks, and Y sub-blocks in the to-be-de-interleaved sequence are determined based on a preset quantity X of pieces of decoded information included in one sub-block, where both X and Y are integers greater than 1; and performing, in a corresponding sub-block group, inter-sub-block bit de-interleaving on decoded information included in at least one sub-block group of L sub-block groups, to obtain a fourth de-interleaved sequence, where the L sub-block groups are determined based on Y sub-blocks in the third de-interleaved sequence and a preset quantity Z of sub-blocks included in one sub-block group, and the Y sub-blocks are determined based on a preset quantity X of pieces of decoded information included in one sub-block, where both Z and L are integers greater than 1.

In some implementations of the fourth aspect, performing, in the corresponding sub-block group, inter-sub-block bit de-interleaving on the decoded information included in the at least one sub-block group of the L sub-block groups includes: performing, in a first sub-block group in a first de-interleaving manner, inter-sub-block bit de-interleaving on decoded information included in the first sub-block group in the at least one sub-block group, where the first sub-block group includes a first sub-block and a second sub-block, the first de-interleaving manner is used to place first decoded information included in the second sub-block at a second location, and the second location is a location of second decoded information in the first sub-block.

In some implementations of the fourth aspect, a remainder obtained after a modulo n operation is performed on a location index of the first decoded information is the same as a remainder obtained after the modulo n operation is performed on a location index of the second decoded information, where n is an integer greater than 1.

In some implementations of the fourth aspect, performing sub-block de-interleaving on the to-be-de-interleaved sequence includes: performing sub-block de-interleaving on the to-be-de-interleaved sequence in a third de-interleaving manner, where the third de-interleaving manner is used to write the Y sub-blocks in the to-be-de-interleaved sequence by column and read the Y sub-blocks by row to complete sub-block de-interleaving, d2 is a quantity of columns written corresponding to the third de-interleaving manner, and a quantity of sub-blocks written in each column is determined in a row-in-column-out interleaving manner of a modulo d2.

In some implementations of the fourth aspect, Z is equal to d2.

In some implementations of the fourth aspect, performing sub-block de-interleaving on the to-be-de-interleaved sequence includes: performing sub-block de-interleaving on the to-be-de-interleaved sequence in a second de-interleaving manner, where the second de-interleaving manner is used to write the Y sub-blocks in the to-be-de-interleaved sequence by row and read the Y sub-blocks by column to complete sub-block de-interleaving, d1 a quantity of written columns corresponding to the second de-interleaving manner, and a quantity of sub-blocks written in each row is determined in a column-in-row-out interleaving manner of a modulo d1, where d1 is an integer greater than 1 and less than Y.

In some implementations of the fourth aspect, sub-blocks included in any one of the L sub-block groups are consecutive sub-blocks in the Y sub-blocks in the third de-interleaved sequence.

According to a fifth aspect, an interleaving method is provided. The method may be performed by a transmitter device. Unless otherwise specified, the "transmitter device" in this application may be the transmitter device (for example, a network device or a terminal device), or may be a component (for example, a processor, a chip, or a chip system) in the transmitter device, or may be a logical module or software that can implement all or some functions of the transmitter device.

The method includes: writing every d sub-blocks in Y sub-blocks by row, where the Y sub-blocks are obtained by dividing a to-be-interleaved codeword sequence based on a preset quantity X of bits included in one sub-block, where both X and Y are integers greater than 1, and d is an integer greater than 1 and less than Y; performing sub-block interleaving on at least one sub-block group of d sub-block groups in a corresponding sub-block group, where the d sub-block groups are sub-block groups corresponding to d columns of sub-blocks written by row; performing, in a corresponding sub-block group, inter-sub-block bit interleaving on bits included in at least one sub-block group of L sub-block groups, where the L sub-block groups are corresponding sub-block groups when Y sub-blocks obtained after sub-block interleaving is performed in a corresponding sub-block group are read by row based on a preset quantity Z of sub-blocks included in one sub-block group, and both Z and L are integers greater than 1; and obtaining a second codeword sequence, where the second codeword sequence is a sequence obtained by reading sub-blocks by column.

It may be understood that, in this technical solution, inter-sub-block bit interleaving may be considered as being implemented in a block interleaving process. To be specific, in the third interleaving manner, block interleaving is first performed on each column of sub-blocks between row-based writing and column-based reading, and then, the obtained Y sub-blocks are divided into the L sub-block groups in a manner of reading by row. It should be noted that the manner of reading by row herein is not real reading, but only a manner of dividing the L sub-block groups is described. After inter-sub-block bit interleaving is performed on the L sub-block groups, the Y sub-blocks are read by column. According to the method, hardware overheads required for interleaving can be reduced, and a throughput can be improved.

In some implementations of the fifth aspect, Z is equal to d.

In some implementations of the fifth aspect, performing, in the corresponding sub-block group, inter-sub-block bit interleaving on the bits included in the at least one sub-block group of the L sub-block groups includes: performing, in a first sub-block group in a first interleaving manner, inter-sub-block bit interleaving on bits included in the first sub-block group in the at least one sub-block group, where the first sub-block group includes a first sub-block and a second sub-block, the first interleaving manner is used to place a first bit included in the first sub-block at a first location, and the first location is a location of a second bit included in the second sub-block.

In some implementations of the fifth aspect, a remainder obtained after a modulo n operation is performed on a location index of the first bit is the same as a remainder obtained after the modulo n operation is performed on a location index of the second bit, where n is an integer greater than 1.

In some implementations of the fifth aspect, performing, in the corresponding sub-block group, sub-block interleaving on the at least one sub-block group of the d sub-block groups includes: performing sub-block interleaving on the at least one sub-block of the d sub-block groups by translating a sub-block in a column direction in the corresponding sub-block group.

According to a sixth aspect, a communication apparatus is provided. The apparatus is configured to perform the method according to the first aspect, the third aspect, or the fifth aspect. Specifically, the apparatus may include a unit and/or a module, for example, a processing unit and/or a communication unit, configured to perform the method according to any one of the first aspect, the third aspect, the fifth aspect, or the possible implementations of the first aspect, the third aspect, or the fifth aspect.

In an implementation, the apparatus is a transmitter device. When the apparatus is the transmitter device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a transmitter device. When the apparatus is the chip, the chip system, or the circuit used in the transmitter device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a seventh aspect, a communication apparatus is provided. The apparatus is configured to perform the method according to the second aspect or the fourth aspect. Specifically, the apparatus may include a unit and/or a module, for example, a processing unit and/or a communication unit, configured to perform the method according to any one of the second aspect or the fourth aspect or the possible implementations of the second aspect or the fourth aspect.

In an implementation, the apparatus is a receiver device. When the apparatus is the receiver device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a receiver device. When the apparatus is a chip, a chip system, or a circuit used in a transmitter device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eighth aspect, a communication apparatus is provided. The apparatus includes at least one processor. The at least one processor is coupled to at least one memory, the at least one memory is configured to store a computer program or instructions, and the at least one processor is configured to invoke the computer program or the instructions from the at least one memory and run the computer program or the instructions, so that the method according to any one of the first aspect, the third aspect, the fifth aspect, or the possible implementations of the first aspect, the third aspect, or the fifth aspect is performed.

In an implementation, the apparatus is a transmitter device.

In another implementation, the apparatus is a chip, a chip system, or a circuit used in a transmitter device.

According to a ninth aspect, a communication apparatus is provided. The apparatus includes at least one processor. The at least one processor is coupled to at least one memory, the at least one memory is configured to store a computer program or instructions, and the at least one processor is configured to invoke the computer program or the instructions from the at least one memory and run the computer program or the instructions, so that the method according to any one of the second aspect or the fourth aspect and the possible implementations of the second aspect or the fourth aspect is performed.

In an implementation, the apparatus is a receiver device.

In another implementation, the apparatus is a chip, a chip system, or a circuit used in a receiver device.

According to a tenth aspect, a processor is provided, configured to perform the method provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eleventh aspect, a computer-readable storage medium is provided. The computer-readable storage medium stores a computer program or instructions, and when the computer program or the instructions are run on a computer, the method according to any one of the first aspect to the fourth aspect or the possible implementations of the first aspect to the fourth aspect is performed.

According to a twelfth aspect, a computer program product including instructions is provided. When the computer program product is run on a computer, and when the computer instructions are run on the computer, the method according to any one of the first aspect to the fourth aspect and the possible implementations of the first aspect to the fourth aspect is performed.

According to a thirteenth aspect, a chip is provided. The chip includes a processor and a communication interface. The processor reads, through the communication interface, a computer program or instructions stored in a memory. When the computer program or the instructions are run, the method according to any one of the first aspect to the fourth aspect or the possible implementations of the first aspect to the fourth aspect is performed.

Optionally, in an implementation, the chip further includes the memory.

According to a fourteenth aspect, a communication system is provided. The communication system includes the communication apparatuses according to the eighth aspect and the ninth aspect.

### BRIEF DESCRIPTION OF DRAWINGS

FIG. 1 is a diagram of a system architecture of a communication system to which technical solutions of this application is applicable;
FIG. 2 is a schematic flowchart of a communication system to which this application is applicable;
FIG. 3 is a diagram of row-column interleaving in an existing communication standard;
FIG. 4 is a schematic flowchart of an interleaving method 400 according to this application;
FIG. 5 is a diagram of a column-in-row-out interleaving manner of a modulo d1;
FIG. 6 is a diagram of a row-in-column-out interleaving manner of a modulo d2;
FIG. 7 is a diagram of implementing inter-sub-block bit interleaving in a possible first interleaving manner;
FIG. 8 is a diagram of implementing inter-sub-block bit interleaving in another possible first interleaving manner;
FIG. 9 is a diagram of a specific example of implementing interleaving according to the method 400;
FIG. 10 is a diagram of another specific example of implementing interleaving according to the method 400;
FIG. 11 is a schematic flowchart of a de-interleaving method 1100 according to this application;
FIG. 12 is a schematic flowchart of an interleaving method 1200 according to this application;
FIG. 13 is a diagram of a specific example of implementing interleaving according to the method 1200;
FIG. 14 is a schematic flowchart of a de-interleaving method 1400 according to this application;
FIG. 15 is a block diagram of a communication apparatus 1500 according to this application; and
FIG. 16 is a block diagram of a communication apparatus 1600 according to this application.

### DESCRIPTION OF EMBODIMENTS

The following describes technical solutions of this application with reference to accompanying drawings.

The technical solutions of embodiments of this application may be applied to various communication systems, including but not limited to a satellite communication system, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. In addition, the technical solutions may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, another communication system, and the like. This is not limited in this specification.

The communication system to which this application is applicable may include one or more transmitters and one or more receivers. Optionally, one of the transmitter and the receiver may be a terminal device, and the other may be a network device. Alternatively, both the transmitter and the receiver are terminal devices. The transmitter may also be considered as an encoder side or an encoding device, and the receiver may also be considered as a decoder side or a decoding device.

For example, the terminal device may also be referred to as user equipment (user equipment, UE), an access terminal, a subscriber unit, a subscriber station, a mobile station, a mobile console, a mobile terminal (mobile terminal, MT), a remote station, a remote terminal, a mobile device, a user terminal, a terminal, a wireless communication device, a user agent, or a user apparatus. The terminal device in embodiments of this application may be a device that provides voice and/or data connectivity for a user, and may be configured to connect a person, an object, and a machine, for example, a handheld device or a vehicle-mounted device having a wireless connection function. The terminal device in embodiments of this application may be a mobile phone (mobile phone), a tablet (pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Optionally, the UE may serve as a base station. For example, the UE may serve as a scheduling entity that provides a sidelink signal between UEs in V2X, D2D, or the like.

In embodiments of this application, an apparatus configured to implement a function of the terminal may be the terminal, or may be an apparatus that can support the terminal in implementing the function, for example, a chip system or a chip. The apparatus may be installed on the terminal. In embodiment of this application, the chip system may include a chip, or may include a chip and another discrete component. The method provided in this application may be performed by a terminal device. Unless otherwise specified, the "terminal device" in this application may be the terminal device, or may be a component (for example, a processor, a chip, or a chip system) in the terminal device, or may be a logical module or software that can implement all or some functions of the terminal device.

For example, the network device may be a device having a wireless transceiver function. The network device may be a device providing a wireless communication function service, and is usually located on a network side, including but not limited to a next generation NodeB (gNodeB, gNB) in a 5th generation (5th generation, 5G) communication system, a base station in a 6th generation (6th generation, 6G) mobile communication system, a base station in a future mobile communication system, an access node in a wireless fidelity (wireless fidelity, Wi-Fi) system, an evolved NodeB (evolved NodeB, eNB) in a long term evolution (long term evolution, LTE) system, a radio network controller (radio network controller, RNC), a NodeB (NodeB, NB), a base station controller (base station controller, BSC), a home base station (for example, a home evolved NodeB or a home NodeB, HNB), a baseband unit (baseband unit, BBU), a transmission reception point (transmission reception point, TRP), a transmitting point (transmitting point, TP), and a base transceiver station (base transceiver station, BTS). In a network structure, the network device may include a central unit (central unit, CU) node, a distributed unit (distributed unit, DU) node, a RAN device including a CU node and a DU node, or a RAN device including a CU-control plane node, a CU-user plane node, and a DU node. Alternatively, the network device may be a radio controller, a relay station, a vehicle-mounted device, a wearable device, and the like in a cloud radio access network (cloud radio access network, CRAN) scenario. In addition, the base station may be a macro base station, a micro base station, a relay node, a donor node, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. This is not limited.

In embodiments of this application, an apparatus configured to implement a function of the network device may be the network device, or may be an apparatus that can support the network device in implementing the function, for example, a chip system or a chip. The apparatus may be mounted in the network device. In embodiment of this application, the chip system may include a chip, or may include a chip and another discrete component. The method provided in this application may be performed by a network device. Unless otherwise specified, the "network device" in this application may be the network device, or may be a component (for example, a processor, a chip, or a chip system) in the network device, or may be a logical module or software that can implement all or some functions of the network device.

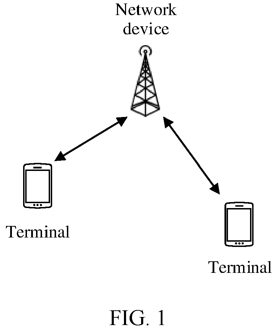

FIG. 1 is a diagram of a system architecture of a communication system to which technical solutions of this application is applicable. The communication system may include one or more network devices and one or more terminal devices. As shown in FIG. 1, the method provided in this application is applicable to communication between a network device and a terminal, that is, uplink or downlink communication. In this communication scenario, the transmitter in this specification may be a terminal in uplink communication or a network device in downlink communication, and the receiver may be a network device in uplink communication or a terminal in downlink communication. In addition, optionally, the technical solutions of this application may also be applied to sidelink communication. In this communication scenario, the transmitter is a transmitting terminal in sidelink communication, and the receiver is a receiving terminal in sidelink communication. In addition, the method may be further applied to another communication scenario, and details are not described again.

Communication systems usually adopt channel coding to improve reliability of data transmission and ensure quality of communication. Channel encoding and decoding is one of core technologies in the wireless communication field, and a performance improvement of channel encoding and decoding can directly improve network coverage and a user transmission rate. A polar code (polar code) is a channel coding scheme that can be strictly proved to reach a Shannon channel capacity. The polar code has features such as good performance and low complexity. Currently, the polar code is determined by the 3rd Generation Partnership Project (3rd generation partnership project, 3GPP) as a 5th generation (5th generation, 5G) enhanced mobile broadband (enhanced mobile broadband, eMBB) scenario (uplink/downlink) control channel coding scheme.

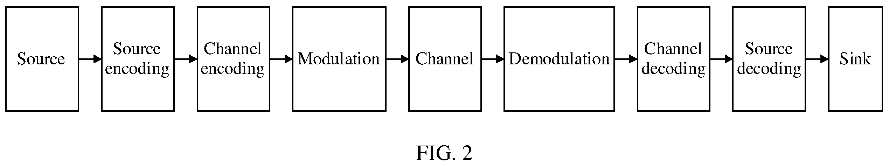

FIG. 2 is a schematic flowchart of a communication system to which this application is applicable. As shown in FIG. 2, channel encoding is located between source encoding and modulation, and is responsible for performing channel coding on bits generated by a source. Channel decoding is located between demodulation and source decoding, and is responsible for restoring a source bit (bit) stream. For example, channel encoding is performed by using a polar code. A transmitter performs channel coding on a source bit stream from media access control (media access control, MAC) by using the polar code, and then sends a modulation symbol to a receiver for demodulation through a noisy channel after modulation based on a codebook, a plurality of bits of a symbol are demodulated to obtain a plurality of pieces of corresponding decoded information, the decoded information is sent to a polar decoder to restore a source bit stream, and the source bit stream is uploaded to the MAC. For example, the decoded information may be a log likelihood ratio (log likelihood ratio, LLR) or a log likelihood (log likelihood, LL).

It may be understood that the interleaving method provided in this application may be considered as a channel coding scheme, may be applied to a dedicated network device or a general-purpose device, and may be applied to various network devices (for example, a base station device) described above, or may be applied to various terminal devices described above. Specifically, the channel coding scheme is mainly implemented by a channel coding unit in these devices.

The method provided in embodiments of this application may be alternatively implemented by using an application-specific integrated circuit (application-specific integrated circuit, ASIC), a field programmable gate array (field programmable gate array, FPGA), or the like, or may be implemented by using software (for example, program code in a memory). This is not limited.

For coding, a basic construction method is considered based on a white Gaussian noise (white Gaussian noise, AWGN) channel. Therefore, it is considered by default that capacities of input sub-channels at all bit locations are consistent. However, in a real case, once high-order modulation is used, or there is fading (fading channel) on a channel, it cannot be ensured that capacities of input sub-channels with all bits are consistent. For example, during higher-order modulation and demodulation, after a plurality of bits in one symbol are demodulated, signal energy of the plurality of bits is different. It may be understood that capacities of subchannels on which a plurality of bits in one high-order modulation are located are inconsistent. After consecutive bits of a codeword are mapped to one symbol, a subchannel capacity of the codeword changes regularly in a demodulation result. Consequently, the subchannel capacity does not comply with an assumed channel environment during encoding construction, and a decoding result deteriorates. Similarly, the fading channel (fading channel) also causes a similar problem, resulting in an excessively large difference between a capacity of a part of consecutive locations of a codeword and a capacity of another part of consecutive locations of the codeword.

To resolve this problem, channel bit interleaving is proposed to de-randomize a difference between sub-channels, so that capacities of sub-channels at all locations of an entire codeword become uniform. For channel bit interleaving, an optimal interleaving solution should be random interleaving of an entire transmitted codeword. However, random interleaving is difficult to implement in actual engineering. Therefore, some implementable interleaving manners are used to interleave the codeword. For example, interleaving manners that can be implemented include a row-column interleaving manner in an existing communication standard and triangular interleaving in 5G-NR.

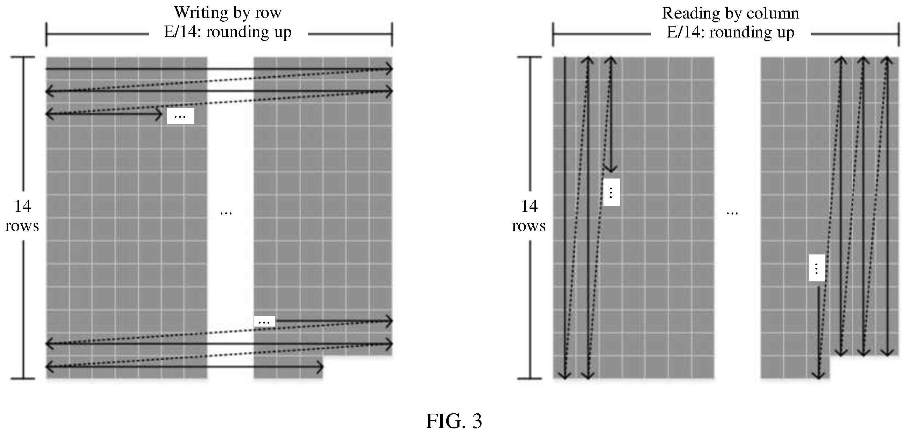

The following briefly describes row-column interleaving in an existing communication standard. In an existing communication standard, a polar code is used as a unique encoding and decoding solution for a control channel and a data channel, a channel bit interleaving solution is designed for the polar code, and a row-column interleaving manner of a modulo 14 is used. The row-column interleaving manner of the modulo 14 is used to input, by row, every $\left⌈E/14\right⌉$ bits in E bits (that is, E is a codeword sending length in current transmission) included in a to-be-interleaved codeword. ┌ ┐ indicates rounding up. 14 is a fixed quantity of rows during writing by row. FIG. 3 is a diagram of row-based writing and column-based reading corresponding to a row-column interleaving manner of a modulo 14.

For example, a to-be-interleaved codeword sequence is *e*₀*, e*₁, *e*₂, *e*₃, ... , *e*_{*E*-1} , a codeword sequence obtained after interleaving is *f*₀, *f*₁, *f*₂, *f*₃, *... f*_{*E-*1}*,* and *f*₀ is a bit that is first output by an interleaver corresponding to the row-column interleaving manner of the modulo 14. Specific pseudocode of the codeword sequence is as follows:

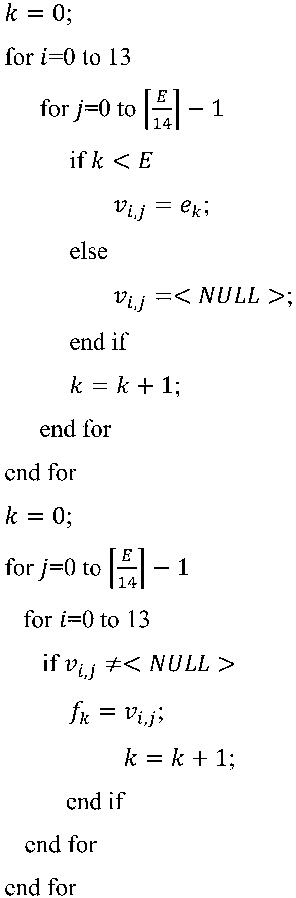

In current channel bit interleaving, to implement a random process, interleaving is usually performed in a large range on a length of an entire transmitted codeword. However, this interleaving manner has a large interleaving range and is irregular. Therefore, an interleaving process and a de-interleaving process consume a large quantity of hardware resources, and it is difficult to improve a degree of parallelism. Therefore, this interleaving manner is not suitable for a channel bit interleaving solution of a next-generation communication system.

In view of this, this application provides an interleaving manner, to effectively resolve the foregoing technical problem. The following describes in detail the method provided in this application.

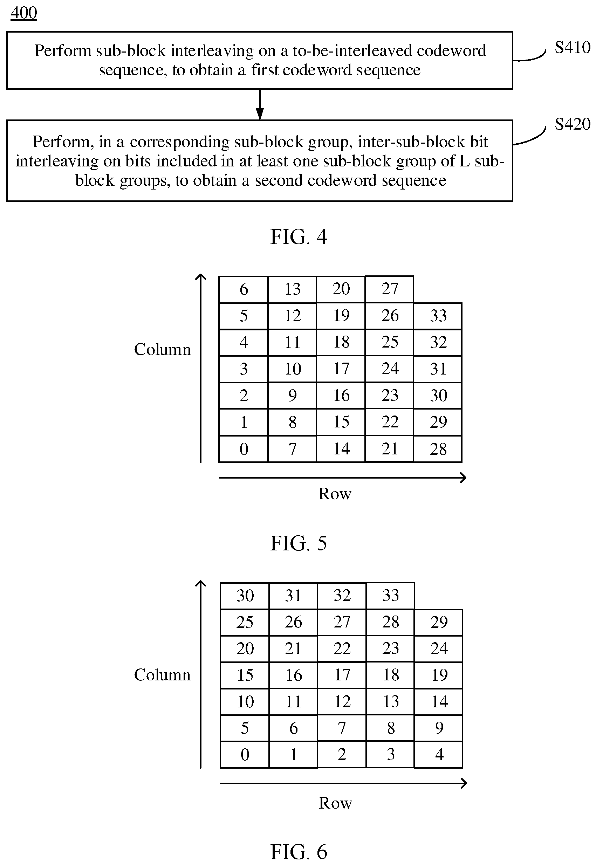

FIG. 4 is a schematic flowchart of an interleaving method 400 according to this application. The method includes the following steps.

S410: A transmitter device performs sub-block interleaving on a to-be-interleaved codeword sequence, to obtain a first codeword sequence, where both the to-be-interleaved codeword sequence and the first codeword sequence include Y sub-blocks, and Y sub-blocks in the to-be-interleaved codeword sequence are determined based on a preset quantity X of bits included in one sub-block, where both X and Y are integers greater than 1.

Optionally, before sub-block interleaving is performed, sub-block division is performed on a to-be-interleaved code word sequence {a₀, a₁, a₂, a₃, ..., a_{N-2}, a_{N-1}} with a length (that is, a quantity of included bits) of N, and based on a preset length X of one sub-block, Y sub-blocks {A₀, A₁, A₂, ..., A_{(Y-1)}} are obtained by dividing the to-be-interleaved codeword sequence, where $Y = \left⌈N/X\right⌉$, and ┌ ┐ indicates rounding up. It may be understood that, if N cannot be exactly divided by X, a length of one of the Y sub-blocks is less than X. For example, if the to-be-interleaved codeword sequence is divided into sub-blocks based on X starting from an initial bit, a length of a last sub-block may be less than X.

Then, sub-block interleaving is performed on the Y sub-blocks obtained by dividing the to-be-interleaved codeword sequence. For example, a block interleaved sequence is I1, and sub-block interleaving is performed on the Y sub-blocks in the to-be-interleaved codeword sequence based on I1, to obtain an interleaved first codeword sequence {B₀, B₁, B₂, ..., B_{(Y-1)}}.

I1 is not specifically limited in this application, provided that block interleaving can be implemented based on I1. For a method for performing sub-block interleaving based on I1, refer to the following pseudocode:

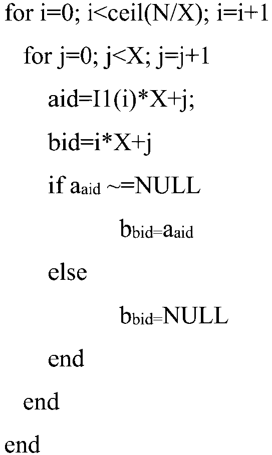

For example, a to-be-interleaved codeword sequence {0, 1, 2, 3, 4, 5, 6, 7, 8, 9, 10, 11, 12, 13, 14, 15, 16, 17, 18, 19, 20, 21, 22, 23, 24, 25, 26} with a length of 27 is divided, and a preset length X of one sub-block is equal to 3. Therefore, after the to-be-interleaved codeword sequence is divided, Y=9 sub-blocks are obtained. The nine sub-blocks are a sub-block 0={0, 1, 2}, a sub-block 1={3, 4, 5}, a sub-block 2={6, 7, 8}, a sub-block 3={9, 10, 11}, a sub-block 4={12, 13, 14}, a sub-block 5={15, 16, 17}, a sub-block 6={18, 19, 20}, a sub-block 7={21, 22, 23}, and a sub-block 8={24, 25, 26}.

Then, sub-block interleaving is performed on the nine sub-blocks obtained through division based on the block interleaved sequence I1. For example, the sub-block interleaved sequence I1={3, 6, 2, 7, 8, 1, 0, 5, 4}, where 3 means that the sub-block 3 is placed at a location of the sub-block 0, 6 means that the sub-block 6 is placed at a location of the sub-block 1, and 2 means that the sub-block 2 is placed at a location of the sub-block 2 (that is, remains unchanged). Details are not described herein. In this case, a codeword sequence (that is, the first codeword sequence) obtained after the sub-block interleaving is {9, 10, 11}, {18, 19, 20}, {6, 7, 8}, {21, 22, 23}, {24, 25, 26}, {3, 4, 5}, {0, 1, 2}, {15, 16, 17}, and {12, 13, 14}.

For example, in this application, block interleaving on the Y sub-blocks may alternatively be implemented in the following two possible block interleaving manners. One is a column-in-row-out interleaving manner of a modulo d1 (that is, writing by column and reading by row), and the other is a row-in-column-out interleaving manner of a modulo d2 (that is, writing by row and reading by column), where both d1 and d2 are integers greater than 1 and less than Y, and d1 and d2 are fixed column quantities or fixed row quantities after writing in corresponding interleaving manners. For ease of description, the following uses d1 and d2 as fixed column quantities after writing in corresponding interleaving manners for description.

For example, d1 and d2 may be prime numbers greater than 1 and less than Y. For example, Y=34, and values of d1 and d2 are 3, 5, or 7.
(1) Column-in-row-out interleaving manner of a modulo d1 (which may be referred to as a second interleaving manner below): The interleaving manner is used to write every $\left⌈Y/d1\right⌉$ sub-blocks in the Y sub-blocks by column and read the Y sub-blocks by row to complete sub-block interleaving. For example, Y=34, and d1=5. In this case, a sub-block read/write manner in the interleaving manner is shown in FIG. 5. Specifically, a sub-block 0 to a sub-block 33 are sequentially read by column, and a quantity of read sub-blocks in each column is $\left⌈34/5\right⌉ = 7$, that is, the sub-block 0 to the sub-block 6 are read in a first column, and the sub-block 7 to the sub-block 13 are read in a second column. The rest can be deduced by analogy. The remaining sub-blocks 28 to 33 are read in a last column. Then, a sub-block corresponding to each column is read, sub-blocks {0, 7, 14, 21, 28} in a first row are read, and sub-blocks {1, 8, 15, 22, 29} in a second row are read, until sub-blocks corresponding to all rows are read. The sub-blocks read by row are interleaved sub-blocks.
(2) Row-in-column-out interleaving manner of a modulo d2 (which may be referred to as a third interleaving manner below): The interleaving manner is used to write every d2 sub-blocks in the Y sub-blocks by row and read the Y sub-blocks by column to complete sub-block interleaving. For example, Y=34, and d2=5. In this case, a sub-block read/write manner in the interleaving manner is shown in FIG. 6. Specifically, a sub-block 0 to a sub-block 33 are sequentially read in rows, and a quantity of sub-blocks read in each row is 5. That is, the sub-block 0 to the sub-block 4 are read in a first row, and the sub-block 5 to the sub-block 9 are read in the first row. The rest can be deduced by analogy. The remaining sub-blocks 30 to 33 are read in a last row. Then, sub-blocks {0, 5, 10, 15, 20, 25, 30} in a first column are read by column, and sub-blocks {1, 6, 11, 16, 21, 26, 31} in a second column are read, until sub-blocks corresponding to all columns are read. The sub-blocks read by column are interleaved sub-blocks.

S420: The transmitter device performs, in a corresponding sub-block group, inter-sub-block bit interleaving on bits included in at least one sub-block group of L sub-block groups, to obtain a second codeword sequence, where the L sub-block groups are determined based on Y sub-blocks in the first codeword sequence and a preset quantity Z of sub-blocks included in one sub-block group, where both Z and L are integers greater than 1.

Optionally, before the inter-sub-block bit interleaving is performed, the Y sub-blocks in the first codeword sequence {B₀, B₁, B₂, ..., B_{(Y-1)}} are divided into sub-block groups. Based on a preset quantity Z of sub-blocks included in one sub-block group, L sub-block groups are obtained by dividing the first codeword sequence, where $L = \left⌈Y/Z\right⌉$, and ┌ ┐ indicates rounding up. It may be understood that, if Y cannot be exactly divided by Z, a quantity of sub-blocks included in one of the L sub-block groups is less than Z. For example, if the first codeword sequence is divided into sub-block groups starting from an initial sub-block based on Z, a quantity of sub-blocks included in a last sub-block group may be less than Z.

For example, sub-blocks included in any one of the L sub-block groups may be consecutive sub-blocks, or may be inconsecutive sub-blocks. This is not limited in this application. It may be understood that the consecutive/inconsecutive sub-blocks herein refer to consecutive/inconsecutive sub-blocks in the Y sub-blocks included in the first codeword sequence.

Then, inter-sub-block bit interleaving is performed on bits included in the at least one sub-block group of the L sub-block groups obtained through division, to obtain an output sequence {c₀, c₁, c₂, c₃, ..., c_{N-2}, c_{N-1}}. Performing, in the corresponding sub-block group, inter-sub-block bit interleaving on the bits included in the at least one sub-block group of the L sub-block groups includes: performing, in a first sub-block group in a first interleaving manner, inter-sub-block bit interleaving on bits included in the first sub-block group in the at least one sub-block group, where the first sub-block group includes a first sub-block and a second sub-block, the first interleaving manner is used to place a first bit included in the first sub-block at a first location, and the first location is a location of a second bit included in the second sub-block. In other words, the first bit in the first sub-block is placed at a location different from a location of a bit in the first sub-block (for example, the second sub-block, a sub-block other than the first sub-block) in the first sub-block group, to implement inter-sub-block bit interleaving. A quantity of bits of inter-sub-block interleaving in the first sub-block group is not limited in this application. Inter-sub-block bit interleaving may be performed on all bits in the first sub-block group, or inter-sub-block bit interleaving may be performed on some bits.

Optionally, when inter-sub-block bit interleaving is performed, in corresponding sub-blocks, on a plurality of sub-block groups in the L sub-block groups, inter-sub-block bit interleaved sequences I2 corresponding to the sub-block groups may be the same or may be different. I2 is not specifically limited in this application, provided that inter-sub-block bit interleaving in a group can be implemented based on I2.

For example, descriptions are provided herein by using an example in which inter-sub-block bit interleaving is performed on each sub-block group of the L sub-blocks in a sub-block group corresponding to same inter-sub-block bit interleaved sequences I2. For a method for performing sub-block interleaving based on I2, refer to the following pseudocode:

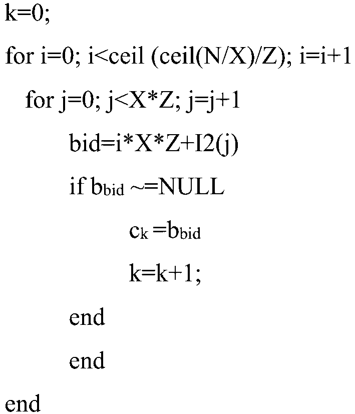

An example is still used for description based on the example in S410. Sub-block groups are divided on a codeword sequence (that is, a first codeword sequence) {9, 10, 11}, {18, 19, 20}, {6, 7, 8}, {21, 22, 23}, {24, 25, 26}, {3, 4, 5}, {0, 1, 2}, {15, 16, 17}, and {12, 13, 14} (that is, sub-blocks {3, 6, 2, 7, 8, 1, 0, 5, 4}) obtained after sub-block interleaving, and a preset quantity Z of sub-blocks included in one sub-block group is equal to 3. Therefore, the nine sub-blocks in the first codeword sequence are divided from front to back based on every three consecutive sub-blocks being one sub-block group, to obtain L=3 sub-block groups. The three sub-block groups are a sub-block group 0={{9, 10, 11}, {18, 19, 20}, {6, 7, 8}} (that is, sub-blocks {3, 6, 2}), a sub-block group 1={{21, 22, 23}, {24, 25, 26}, {3, 4, 5}} (that is, sub-blocks {7, 8, 1}), and a sub-block group 2={{0, 1, 2}, {15, 16, 17}, {12, 13, 14}} (that is, sub-blocks {0, 5, 4}).

Then, inter-sub-block bit interleaving is performed on the three sub-block groups obtained through division based on the inter-sub-block bit interleaved sequence I2. It can be learned that a quantity of bits for inter-sub-block bit interleaving in each sub-block group is X*Z=9. For example, for the inter-sub-block bit interleaved sequence I2={3, 8, 1, 6, 0, 2, 7, 5, 4}, inter-sub-block bit interleaving is performed on the sub-block group 0={{9, 10, 11}, {18, 19, 20}, {6, 7, 8}}, to obtain {18, 8, 10, 6, 9, 11, 7, 20, 19}, inter-sub-block bit interleaving is performed on the sub-block group 1={{21, 22, 23}, {24, 25, 26}, {3, 4, 5}}, to obtain {24, 5, 22, 3, 21, 23, 4, 26, 25}, and inter-sub-block bit interleaving is performed on the sub-block group 2={{0, 1, 2}, {15, 16, 17}, {12, 13, 14}}, to obtain {15, 14, 1, 12, 0, 2, 13, 17, 16}. Therefore, a finally obtained codeword sequence (that is, the second codeword sequence) is {18, 8, 10, 6, 9, 11, 7, 20, 19, 24, 5, 22, 3, 21, 23, 4, 26, 25, 15, 14, 1, 12, 0, 2, 13, 17, 16}.

Optionally, if sub-block interleaving is performed in a column-in-row-out interleaving manner of a modulo d1 in S410, Z may be equal to d1, that is, a row of sub-blocks that are read are divided into one sub-block group.

Optionally, if sub-block interleaving is performed in a row-in-column-out interleaving manner of a modulo d2 in S410, Z may be equal to d2, that is, a column of read sub-blocks is divided into one sub-block group.

The following provides a possible specific first interleaving manner. In the first interleaving manner, bits in a sub-block group are shifted based on locations congruent modulo n. The congruence modulo n locations mean that a remainder obtained after the modulo n operation is performed on a location index of the first bit in the first sub-block in the first sub-block group is the same as a remainder obtained after the modulo n operation is performed on a location index of the second bit in the second sub-block in the first sub-block group, where n is an integer greater than 1. For example, n is a prime number greater than 1. A location index S of a bit (for example, the first bit or the second bit) in the first sub-block group indicates that the bit is an S^{th} bit in all bits in the first sub-block group.

Optionally, offset values corresponding to all bits in the first sub-block may be the same or may be different. This is not limited in this application. For example, if a remainder obtained after the modulo n operation is performed on location indexes of a plurality of bits in the first sub-block group is the same as a remainder obtained after the modulo n operation is performed on the location index of the first bit, the first bit may be shifted to a location of any one of the plurality of bits.

It may be understood that inter-sub-block bit interleaving is bit interleaving in one sub-block group. Therefore, the following uses only one sub-block group for description. For example, an interleaving manner is performed in a column-in-row-out interleaving manner of a modulo 5 shown in FIG. 5. The sub-block group A corresponding to the sub-blocks {0, 7, 14, 21, 28} read in the first row is used as an example for description.

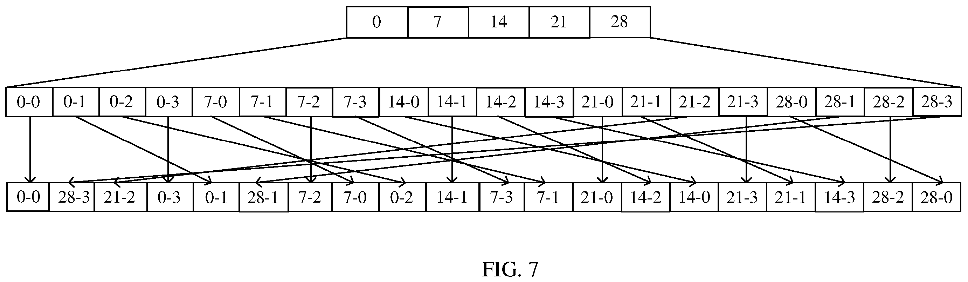

For example, as shown in FIG. 7, a length of each sub-block in the sub-block group A is 4 (that is, including 4 bits), where 0-0, 0-1, 0-2, and 0-3 respectively indicate a 0^{th} bit to a 3^{rd} bit of the sub-block 0, and 7-0, 7-1, 7-2, and 7-3 respectively indicate a 0^{th} bit to a 3^{rd} bit of the sub-block 7, and details are not described herein. FIG. 7 shows that shifting is performed based on locations congruent modulo 3, and a bit whose location index modulo 3 has a remainder of 0 in the sub-block group A is shifted by 0 (that is, 0*3) bit locations (that is, the locations remain unchanged, for example, locations of 0-0, 0-3, and 7-2 remain unchanged). In the sub-block group A, a bit whose location index modulo 3 has a remainder of 1 is shifted by 3 (that is, 1*3) bit locations (for example, 0-1 is placed at a location of 7-0 in the sub-block 7, and 7-0 is placed at a location of 7-3 in the sub-block 7). In the sub-block group A, a bit whose location index modulo 3 has a remainder of 2 is shifted by 6 (that is, 2*3) bit locations (for example, 0-2 is placed at a location of 14-0 in the sub-block 14, and 7-1 is placed at a location of 14-3 in the sub-block 14).

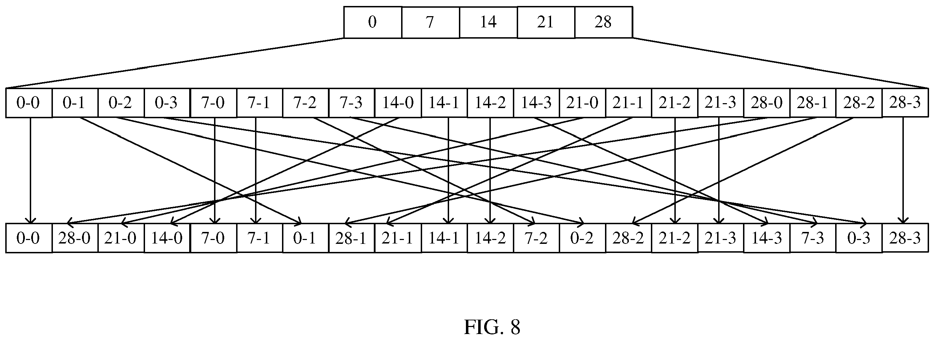

For example, as shown in FIG. 8, a length of each sub-block in the sub-block group A is 4 (that is, including 4 bits), where 0-0, 0-1, 0-2, and 0-3 respectively indicate a 0^{th} bit to a 3^{rd} bit of the sub-block 0, and 7-0, 7-1, 7-2, and 7-3 respectively indicate a 0^{th} bit to a 3^{rd} bit of the sub-block 7, and details are not described herein. FIG. 8 shows that shifting is performed based on locations congruent modulo 5, and in the sub-block group A, a bit whose location index modulo 5 has a remainder of 0 is shifted by 0 (that is, 0*5) bit locations (for example, locations of 0-0 and 7-1 remain unchanged). In the sub-block group A, a bit whose location index modulo 5 has a remainder of 1 is shifted by 5 (1*5) bit locations (for example, 0-1 is placed in a location of 7-2 in the sub-block 7, and 7-2 is placed in a location of 14-3 in the sub-block 14). In the sub-block group A, a bit whose location index modulo 5 has a remainder of 2 is shifted by 10 (2*5) bit locations (for example, 0-2 is placed in a location of 21-0 in the sub-block 21, and 7-3 is placed in a location of 28-1 in the sub-block 28). In the sub-block group A, a bit whose location index modulo 5 has a remainder of 3 is shifted by 15 (that is, 3*5) bit locations (for example, 0-3 is placed in a location of 28-2 in the sub-block 28, and 14-0 is placed in a location of 0-3 in the sub-block 0). In the sub-block group A, a bit whose location index modulo 5 has a remainder of 4 is shifted by 20 (that is, 4*5) bit locations (that is, shifted by 0 bit locations) (for example, locations of 7-0 and 14-1 remain unchanged).

In the foregoing technical solution, an interleaving process of the to-be-interleaved codeword sequence is divided into two steps. A first step is sub-block interleaving, and originally aggregated bit locations are distributed to different locations in a transmit sequence in a large range through sub-block interleaving; and a second step is performing inter-sub-block bit interleaving in a small range in a sub-block group including a plurality of sub-blocks, so that a correlation between consecutive bits is broken. In this case, a degree of parallelism can be improved through sub-block interleaving in a large range, and the inter-sub-block bit interleaving in a small range in a sub-block group can be obtained based on a fixed interconnection relationship, and hardware implementation is easy. In this way, a problem of irregular de-interleaving caused by small-granularity bit interleaving performed in a large range in original interleaving is resolved, the degree of parallelism cannot be improved, and hardware overheads are high.

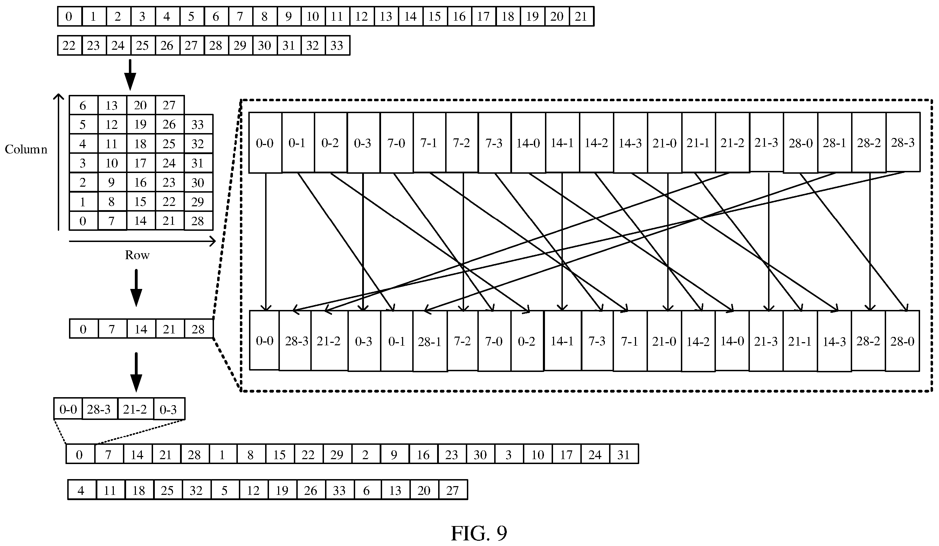

The following provides a specific example according to the method 400 with reference to FIG. 9. As shown in FIG. 9, the to-be-interleaved codeword sequence includes Y=34 sub-blocks in total, which are a sub-block 0 to a sub-block 33, and each sub-block includes X=4 bits. As shown in FIG. 9, (1) sub-block interleaving is performed on Y sub-blocks in the to-be-interleaved codeword sequence in a column-in-row-out interleaving manner of a modulo d1=5. Specifically, the sub-block 0 to the sub-block 6 are read in a first column, and the sub-block 7 to the sub-block 13 are read in a second column. The rest can be deduced by analogy. The remaining sub-blocks 28 to 33 are read in a last column. Then, sub-blocks corresponding to all columns are read, and sub-blocks {0, 7, 14, 21, 28} in a first row are read, sub-blocks {1, 8, 15, 22, 29} are read in a second row, until sub-blocks corresponding to all rows are read to obtain a first codeword sequence. (2) Then, in this example, Z=d1=5, that is, each row of sub-blocks read by row is divided into one sub-block group, to obtain L=7 sub-block groups, and inter-sub-block bit interleaving is performed on each sub-block group. In this example, all bits in each sub-block group are shifted based on locations congruent modulo 3, to implement inter-sub-block bit interleaving. For a procedure of performing inter-sub-block bit interleaving on the sub-blocks {0, 7, 14, 21, 28} read in the first row, refer to descriptions corresponding to FIG. 7. A method for performing inter-sub-block bit interleaving on the sub-block groups corresponding to the second row to a seventh row is the same as the method for performing inter-sub-block bit interleaving on the sub-block groups corresponding to the first row, and details are not described herein. (3) Finally, a final second codeword sequence is obtained after inter-sub-block bit interleaving is completed for all sub-block groups.

It can be learned from the description in S420 that sub-blocks included in any one of the L sub-block groups may be consecutive sub-blocks, or may be inconsecutive sub-blocks in the Y sub-blocks in the first codeword sequence. It may be understood that any one of the L sub-block groups in FIG. 9 includes Z consecutive sub-blocks in the Y sub-blocks in the first codeword sequence. The following specifically describes an implementation in which one of the L sub-block groups includes inconsecutive sub-blocks in the Y sub-blocks in the first codeword sequence. For example, in this implementation, the first codeword sequence may be obtained in a second interleaving manner (that is, a column-in-row-out interleaving manner of a modulo d1), or may be obtained in a third interleaving manner (that is, a row-in-column-out interleaving manner of a modulo d2). For ease of description, the following uses an example in which block interleaving is performed on the Y sub-blocks in the to-be-interleaved codeword sequence in the third interleaving manner for description.

For example, in this implementation, the third interleaving manner is further used to perform, in a corresponding sub-block group between row-based writing and column-based reading, sub-block interleaving on at least one sub-block group of the d2 sub-block groups. If the d2 sub-block groups are sub-block groups corresponding to d2 columns of sub-blocks that are written by row, the first codeword sequence is a sequence obtained by reading by column after block interleaving is performed on a corresponding sub-block group, and the L sub-block groups may be L sub-block groups obtained by reading every Z sub-blocks by row after block interleaving is performed on the corresponding sub-block groups. In this case, any one of the L sub-block groups includes inconsecutive sub-blocks in the Y sub-blocks in the first codeword sequence.

Optionally, Z is equal to d2, that is, after writing by row, each row of sub-blocks in a corresponding sub-block obtained after sub-block interleaving is performed on a sub-block group corresponding to each column in the sub-block group is divided into one sub-block group.

Optionally, that the third interleaving manner is used to perform sub-block interleaving on at least one sub-block group of the d2 sub-block groups in the corresponding sub-block group between row-based writing and column-based reading includes: The third de-interleaving manner is used to perform, in the corresponding sub-block group by translating a sub-block in a column direction, sub-block de-interleaving on the at least one sub-block group of the d2 sub-block groups.

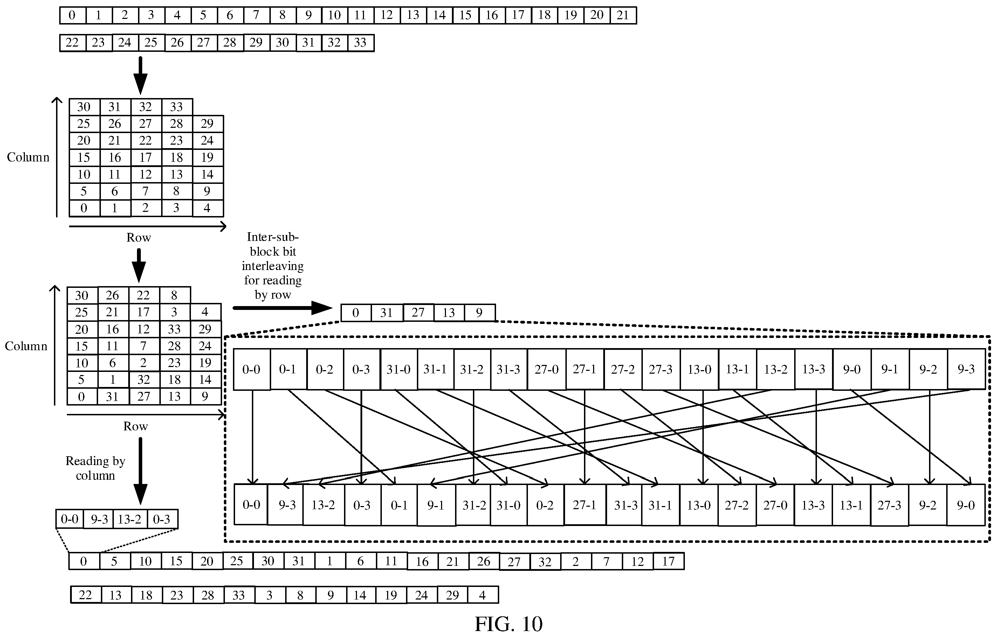

The following provides an example for description with reference to FIG. 10. As shown in FIG. 10, the to-be-interleaved codeword sequence includes Y=34 sub-blocks in total, which are a sub-block 0 to a sub-block 33, and each sub-block includes X=4 bits. As shown in FIG. 10, (1) sub-block interleaving is performed on Y sub-blocks in the to-be-interleaved codeword sequence in a row-in-column-out interleaving manner of a modulo d2=5. Specifically, five sub-blocks are read in each row, that is, the sub-block 0 to the sub-block 4 are read in a first row, and the sub-block 5 to the sub-block 9 are read in the first row. The rest can be deduced by analogy. The remaining sub-blocks 30 to 33 are read in a last row. (2) Then, each column of sub-blocks are translated (that is, interleaved) in a column direction (that is, in a sub-block group). For example, sub-blocks in a first column remain unchanged, sub-blocks in a second column are translated upward by one sub-block, sub-blocks in a third column are translated upward by two sub-blocks, sub-blocks in a fourth column are translated upward by three sub-blocks, and sub-blocks in a fifth column are translated upward by five sub-blocks. Locations of sub-blocks in each column after translation are shown in FIG. 10. In this case, a first codeword sequence read by column is a sub-block {0, 5, 10, 15, 20, 25, 30, 31, 1, 6, 11, 16, 21, 26, 27, 32, 2, 7, 12, 17, 22, 13, 18, 23, 28, 33, 3, 8, 9, 14, 19, 24, 29, 4}. (3) In this example, Z=d2=5. Sub-blocks obtained after each column of sub-blocks in (2) are translated in the column direction are divided into one sub-block group in a manner of reading sub-blocks by row, to obtain an L=7 sub-block group. The seven sub-block groups are a sub-block group 0=sub-blocks {0, 31, 27, 13, 9}, a sub-block group 1={5, 1, 32, 18, 14}, a sub-block group 2={10, 6, 2, 23, 19}, a sub-block group 3={15, 11, 7, 28, 24}, a sub-block group 4={20, 16, 12, 33, 29}, a sub-block group 5={25, 21, 17, 3, 4}, and a sub-block group 6={30, 26, 22, 8}, and inter-sub-block bit interleaving is performed on each sub-block group. In this example, all bits in each sub-block group are shifted based on locations congruent modulo 3, to implement inter-sub-block bit interleaving. An example in which inter-sub-block bit interleaving is performed on bits included in the sub-block group 0 (that is, the sub-blocks {0, 31, 27, 13, 9}) read in the first row is used for description. In the sub-block group, a bit whose location index modulo 3 has with a remainder of 0 is shifted by 0 sub-blocks (that is, locations remain unchanged, for example, locations of 0-0, 0-3, and 31-2 remain unchanged). In the sub-block group, a bit whose location index modulo 3 has a remainder of 1 is shifted by one sub-block (for example, 0-1 is placed at a location of 31-0 in the sub-block 31, and 31-0 is placed at a location of 31-3 in the sub-block 31). In the sub-block group, a bit whose location index modulo 3 has a remainder of 2 is shifted by two sub-blocks (for example, 0-2 is placed at a location of 27-0 in the sub-block 27, and 31-1 is placed at a location of 27-3 in the sub-block 27). A method for performing inter-sub-block bit interleaving on the sub-block groups corresponding to the second row to a seventh row is the same as the method for performing inter-sub-block bit interleaving on the sub-block groups corresponding to the first row, and details are not described herein. (4) Finally, a final second codeword sequence is obtained by reading sub-blocks by column after inter-sub-block bit interleaving is completed for all sub-block groups.

It may be understood that, in this implementation, inter-sub-block bit interleaving may be considered as being implemented in a block interleaving process. To be specific, in the third interleaving manner, block interleaving is first performed on each column of sub-blocks between row-based writing and column-based reading, and then, the obtained Y sub-blocks are divided into the L sub-block groups in a manner of reading by row. It should be noted that the manner of reading by row herein is not real reading, but only a manner of dividing the L sub-block groups is described. After inter-sub-block bit interleaving is performed on the L sub-block groups, the Y sub-blocks are read by column.

Optionally, the interleaving method corresponding to this implementation may alternatively be implemented according to another interleaving method. The following describes another interleaving method. The method includes:
(1) The transmitter device writes every d2 sub-blocks of the Y sub-blocks by row, where the Y sub-blocks are obtained by dividing the to-be-interleaved codeword sequence based on a preset quantity X of bits included in one sub-block, both X and Y are integers greater than 1, and d2 is an integer greater than 1 and less than Y;
(2) the transmitter device performs sub-block interleaving on at least one sub-block group of the d2 sub-block groups in a corresponding sub-block group, where the d2 sub-block groups are sub-block groups corresponding to the d2 columns of sub-blocks that are written by row;
(3) the transmitter device performs, in a corresponding sub-block group, inter-sub-block bit interleaving on bits included in at least one sub-block group of the L sub-block groups, where the L sub-block groups are sub-block groups obtained when the Y sub-blocks obtained after the sub-block interleaving is performed in the corresponding sub-block group are read by row based on a preset quantity Z of sub-blocks included in one sub-block group, and both Z and L are integers greater than 1; and
(4) the transmitter device obtains a second codeword sequence, where the second codeword sequence is a sequence obtained by reading sub-blocks by column.

The foregoing describes in detail the interleaving method shown in the method 400. Based on the procedure shown in FIG. 2, after obtaining the second codeword sequence, the transmitter performs modulation based on the codebook, and then sends a modulation symbol to the receiver for demodulation through a noisy channel. Specifically, the receiver simultaneously demodulates N bits in the symbol, to obtain a to-be-de-interleaved sequence including N pieces of decoded information. Then, the receiver performs de-interleaving on the to-be-de-interleaved sequence. The following describes in detail the de-interleaving method.

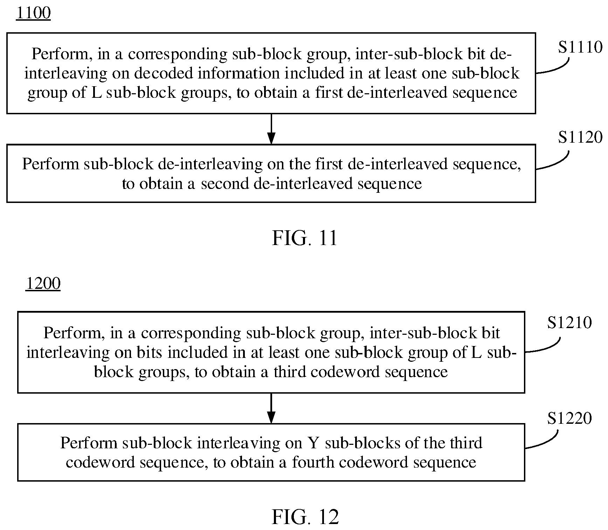

FIG. 11 is a schematic flowchart of a de-interleaving method 1100 according to this application. It may be understood that, in the de-interleaving method shown in FIG. 11, the second codeword sequence determined in the method 400 is de-interleaved. Therefore, corresponding to the method 400, the receiver needs to first perform a bit de-interleaving operation, and then perform a sub-block de-interleaving operation. The method includes the following steps.

S1110: The receiver device performs, in a corresponding sub-block group, inter-sub-block bit de-interleaving on decoded information included in at least one sub-block group of L sub-block groups, to obtain a first de-interleaved sequence, where the L sub-block groups are determined based on Y sub-blocks in the to-be-de-interleaved sequence and a preset quantity Z of sub-blocks included in one sub-block group, and the Y sub-blocks are determined based on a preset quantity X of pieces of decoded information included in one sub-block, where X, Y, Z, and L are all integers greater than 1.

Optionally, before inter-sub-block bit de-interleaving is performed, first, sub-block division needs to be performed on a to-be-de-interleaved sequence including N pieces of decoded information, and Y sub-blocks obtained by dividing the to-be-de-interleaved sequence based on a preset quantity X of pieces of decoded information included in one sub-block, where , and ┌ ┐ indicates rounding up. Then, sub-block group division needs to be performed on the Y sub-blocks obtained by dividing the to-be-de-interleaved sequence. Based on a preset quantity Z of sub-blocks included in one sub-block group, L sub-block groups obtained by dividing the to-be-de-interleaved sequence, where $L = \left⌈Y/Z\right⌉$. It should be noted that, if N cannot be exactly divided by X, a quantity of pieces of decoded information included in one of the Y sub-blocks is less than X. Similarly, if Y cannot be exactly divided by Z, a quantity of sub-blocks included in one of the L sub-block groups is less than Z.

Then, inter-sub-block bit de-interleaving is performed on decoded information included in at least one sub-block group of the L sub-block groups obtained through division, to obtain a de-interleaved output sequence (namely, a first de-interleaved sequence). The first de-interleaved sequence includes Y sub-blocks.

It may be understood that values of same parameters in the de-interleaving method 1100 and the method 400 are the same.

It may be further understood that the L sub-block groups in S1110 are in a one-to-one correspondence with the L sub-block groups in S420. Specifically, a first sub-block group in the L sub-block groups in S1110 includes a plurality of pieces of corresponding decoded information obtained after a plurality of bits in the first sub-block group in the L sub-block groups in S420 are demodulated, and the first sub-block group in S420 and the first sub-block group in S1110 are corresponding sub-block groups.

Optionally, performing, in the corresponding sub-block group, inter-sub-block bit de-interleaving on the decoded information included in the at least one sub-block group of the L sub-block groups includes: performing, in a first sub-block group in a first de-interleaving manner, inter-sub-block bit de-interleaving on decoded information included in the first sub-block group in the at least one sub-block group, where the first sub-block group includes a first sub-block and a second sub-block, the first de-interleaving manner is used to place first decoded information included in the second sub-block at a second location, and the second location is a location of second decoded information in the first sub-block.

It may be understood that the first de-interleaving manner is an inverse operation of the first interleaving manner. In other words, the transmitter performs, in the first interleaving manner, inter-sub-block bit interleaving on the bits in the first sub-block group in S420. In this case, the transmitter performs de-interleaving, in the first de-interleaving manner, on the decoded information obtained by using the first sub-block group in S1110, that is, performs an inverse operation corresponding to an interleaving operation. Based on the descriptions in S420, the transmitter places a first bit from the second location to a first location in the first interleaving manner. In this case, the receiver places decoded information of the first location (namely, first decoded information corresponding to the first bit) at the second location in the first de-interleaving manner during de-interleaving. Optionally, a remainder obtained after a modulo n operation is performed on a location index of the first location is the same as a remainder obtained after the modulo n operation is performed on a location index of the second location, where n is an integer greater than 1.

S1120: The receiver device performs sub-block de-interleaving on the first de-interleaved sequence, to obtain a second de-interleaved sequence.

Specifically, sub-block de-interleaving is performed on the Y sub-blocks in the first de-interleaved sequence, to obtain the second de-interleaved sequence.

It may be understood that the deblocking interleaving manner is determined based on a corresponding block interleaving manner. For example, the following describes a corresponding de-interleaving manner based on the column-in-row-out interleaving manner of the modulo d1 and the row-in-column-out interleaving manner of the modulo d2 that are provided in S410.
(1) Second de-interleaving manner: The de-interleaving manner is a de-interleaving manner corresponding to the column-in-row-out interleaving manner of the modulo d1. The second de-interleaving manner is used to write the Y sub-blocks in the first de-interleaved sequence by row and read the Y sub-blocks by column to complete sub-block de-interleaving, d1 is a quantity of written columns corresponding to the second de-interleaving manner, and a quantity of sub-blocks written in each row is determined in the column-in-row-out interleaving manner of the modulo d1.
   A quantity of sub-blocks written into each row is determined based on in the column-in-row-out interleaving manner of the modulo d1. It may also be understood that a quantity of sub-blocks written into each row needs to be the same as a quantity of sub-blocks written into each row in the column-in-row-out interleaving manner of the modulo d1.
(2) Third de-interleaving manner: The de-interleaving manner is a de-interleaving manner corresponding to the row-in-column-out interleaving manner of the modulo d2. The third de-interleaving manner is used to write the Y sub-blocks in the first de-interleaved sequence by column and read the Y sub-blocks by row to complete sub-block de-interleaving, d2 is a quantity of written columns corresponding to the third de-interleaving manner, and a quantity of sub-blocks written into each column is determined in the row-in-column-out interleaving manner of the modulo d2.

A quantity of sub-blocks written into each column is determined based on the row-in-column-out interleaving manner of the modulo d2. It may also be understood that a quantity of sub-blocks written into each column needs to be the same as a quantity of sub-blocks written into each column in the row-in-column-out interleaving manner of the modulo d2.

It should be noted that, for the example shown in FIG. 10, in this example, inter-sub-block bit interleaving is implemented in a block interleaving process. To be specific, in the third interleaving manner, one block interleaving is first performed on each column of sub-blocks between row-based writing and column-based reading, after the obtained Y sub-blocks are divided into the L sub-block groups in a row-based reading manner, and after inter-sub-block bit interleaving is performed on the L sub-block groups, the Y interleaved sub-blocks are read by column. Correspondingly, during de-interleaving, in S1120, the third de-interleaving manner is further used to perform, in a corresponding sub-block group, sub-block de-interleaving on at least one sub-block group of d2 sub-block groups between column-based writing and row-based reading, and the d2 sub-block groups are sub-block groups corresponding to d2 columns of sub-blocks that are written by column. During de-interleaving, the L sub-block groups in S1110 are sub-block groups that are obtained through row-based reading before sub-block de-interleaving is performed on the d2 sub-block groups in the corresponding sub-block group. Other descriptions are the same as those in the foregoing de-interleaving method, and details are not described herein.

The interleaving method 400 and the corresponding de-interleaving method 1100 are described in detail above. The following describes in detail another interleaving method and a corresponding de-interleaving method.

FIG. 12 is a schematic flowchart of an interleaving method 1200 according to this application. An interleaving process of a to-be-interleaved codeword sequence in the method 1200 is also divided into two steps. A difference from the method 400 lies in that in the method 1200, a first step is sub-block interleaving; and a second step is performing inter-sub-block bit interleaving in a small range in a sub-block group including a plurality of sub-blocks. The method includes the following steps.

S1210: The transmitter device performs, in a corresponding sub-block group, inter-sub-block bit interleaving on bits included in at least one sub-block group of L sub-block groups, to obtain a third codeword sequence, where the L sub-block groups are determined based on Y sub-blocks in a to-be-interleaved codeword sequence and a preset quantity Z of sub-blocks included in one sub-block group, and the Y sub-blocks are determined based on a preset quantity X of bits included in one sub-block, where X, Y, Z, and L are all integers greater than 1.

Optionally, before inter-sub-block bit interleaving is performed, first, sub-block division needs to be performed on a to-be-interleaved codeword sequence {a₀, a₁, a₂, a₃, ..., a_{N-2}, a_{N-1}} with a length (that is, a quantity of included bits) of N, to obtain Y sub-blocks {A₀, A₁, A₂, ..., A_{(Y-1)}} by dividing the to-be-interleaved codeword sequence based on a preset length X of one sub-block, where $Y = \left⌈N/X\right⌉$, and ┌ ┐ indicates rounding up; and then, sub-block group division needs to be performed on the Y sub-blocks obtained by dividing the to-be-interleaved codeword sequence, and L sub-block groups are obtained by dividing the to-be-interleaved codeword sequence based on a preset quantity Z of sub-blocks included in one sub-block group, where L=[Y/Z]. It should be noted that, if N cannot be exactly divided by X, a length of one of the Y sub-blocks is less than X. Similarly, if Y cannot be exactly divided by Z, a quantity of sub-blocks included in one of the L sub-block groups is less than Z.

Then, inter-sub-block bit interleaving is performed on bits included in at least one sub-block group of the L sub-block groups obtained through division, to obtain an interleaved output sequence {b₀, b₁, b₂, b₃, ..., b_{N-2}, b_{N-1}} (that is, a third codeword sequence). Y sub-blocks in the third codeword sequence are {B₀, B₁, B₂, ..., B_{(Y-1)}}. Performing, in the corresponding sub-block group, inter-sub-block bit interleaving on the bits included in the at least one sub-block group of the L sub-block groups includes: performing, in a first sub-block group in a first interleaving manner, inter-sub-block bit interleaving on bits included in the first sub-block group in the at least one sub-block group, where the first sub-block group includes a first sub-block and a second sub-block, the first interleaving manner is used to place a first bit included in the first sub-block at a first location, and the first location is a location of a second bit included in the second sub-block. In other words, the first bit in the first sub-block is placed at a location different from a location of a bit in the first sub-block (for example, the second sub-block) in the first sub-block group, to implement inter-sub-block bit interleaving. A quantity of bits of inter-sub-block interleaving in the first sub-block group is not limited in this application. Inter-sub-block bit interleaving may be performed on all bits in the first sub-block group, or inter-sub-block bit interleaving may be performed on some bits.

Optionally, when inter-sub-block bit interleaving is performed, in corresponding sub-blocks, on a plurality of sub-block groups in the L sub-block groups, inter-sub-block bit interleaved sequences I2 corresponding to the sub-block groups may be the same or may be different. I2 is not specifically limited in this application, provided that inter-sub-block bit interleaving in a group can be implemented based on I2.

For example, descriptions are provided herein by using an example in which inter-sub-block bit interleaving is performed on each sub-block group of the L sub-blocks in a sub-block group corresponding to same inter-sub-block bit interleaved sequences I2. The pseudocode for performing sub-block interleaving based on I2 is as follows:

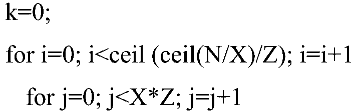

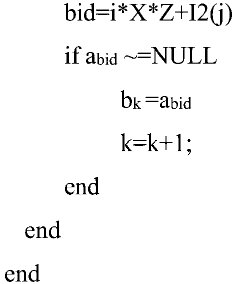

The following provides an example for description with reference to a specific example. For example, first, sub-block division is performed on a to-be-interleaved codeword sequence {0, 1, 2, 3, 4, 5, 6, 7, 8, 9, 10, 11, 12, 13, 14, 15, 16, 17, 18, 19, 20, 21, 22, 23, 24, 25, 26} with a length of 27, and a preset length X of one sub-block is equal to 3. Therefore, after the to-be-interleaved codeword sequence is divided, Y=9 sub-blocks are obtained. The nine sub-blocks are a sub-block 0={0, 1, 2}, a sub-block 1={3, 4, 5}, a sub-block 2={6, 7, 8}, a sub-block 3={9, 10, 11}, a sub-block 4={12, 13, 14}, a sub-block 5={15, 16, 17}, a sub-block 6={18, 19, 20}, a sub-block 7={21, 22, 23}, and a sub-block 8={24, 25, 26}; and then, the nine sub-blocks are divided into sub-block groups, and a preset quantity Z of sub-blocks included in one sub-block group is equal to 3. Therefore, the nine sub-blocks in the first codeword sequence are divided from front to back based on every three consecutive sub-blocks being one sub-block group, to obtain L=3 sub-block groups. The three sub-block groups are a sub-block group 0={{0, 1, 2}, {3, 4, 5}, {6, 7, 8}}, a sub-block group 1={{9, 10, 11}, {12, 13, 14}, {15, 16, 17}}, and a sub-block group 2={{18,19,20}, {21, 22, 23}, {24, 25, 26}}.

Then, inter-sub-block bit interleaving is performed on the three sub-block groups obtained through division based on the inter-sub-block bit interleaved sequence I2. It can be learned that a quantity of bits for inter-sub-block bit interleaving in each sub-block group is X*Z=9. For example, for the inter-sub-block bit interleaved sequence I2={3, 8, 1, 6, 0, 2, 7, 5, 4}, inter-sub-block bit interleaving is performed on the sub-block group 0={{0, 1, 2}, {3, 4, 5}, {6, 7, 8}}, to obtain {3, 8, 1, 6, 0, 2, 7, 5, 4}, inter-sub-block bit interleaving is performed on the sub-block group 1={{9, 10, 11}, {12, 13, 14}, {15, 16, 17}}, to obtain {12, 17, 10, 15, 9, 11, 16, 14, 13}, and inter-sub-block bit interleaving is performed on the sub-block group 2={{18, 19, 20}, {21, 22, 23}, {24, 25, 26}}, to obtain {21, 26, 19, 24, 18, 20, 25, 23, 22}. Therefore, a codeword sequence (that is, the third codeword sequence) obtained after the inter-sub-block bit interleaving is {3, 8, 1}, {6, 0, 2}, {7, 5, 4}, {12, 17, 10}, {15, 9, 11}, {16, 14, 13}, {21, 26, 19}, {24, 18, 20}, and {25, 23, 22}.

For example, in the method, bits in one sub-block group in the first interleaving manner are shifted based on locations congruent modulo n, to implement interleaving. For details, refer to the descriptions and corresponding examples in S420. Details are not described herein again.

S1220: The transmitter device performs sub-block interleaving on the Y sub-blocks in the third codeword sequence, to obtain a fourth codeword sequence.

If the Y sub-blocks in the third codeword sequence are {B₀, B₁, B₂, ..., B_{(Y-1)}}, sub-block interleaving is performed on the Y sub-blocks in the third codeword sequence. For example, the block interleaved sequence is I1, and sub-block interleaving is performed on the Y sub-blocks in the third codeword sequence based on I1, to obtain an interleaved fourth codeword sequence {c₀, c₁, c₂, c₃, ..., c_{N-2}, c_{N-1}}.

I1 is not specifically limited in this application, provided that block interleaving can be implemented based on I1. For a method for performing sub-block interleaving based on I1, refer to the following pseudocode:

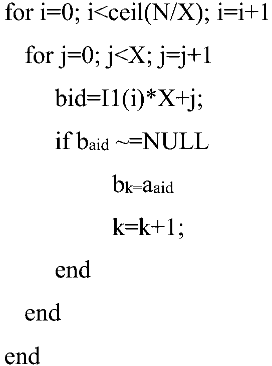

For example, based on the example in S1210, sub-block interleaving is performed on the nine sub-blocks in the third codeword sequence based on the block interleaved sequence I1. If the sub-block interleaved sequence is I1={3, 6, 2, 7, 8, 1, 0, 5, 4}, 3 means that the sub-block 3 is placed at a location of the sub-block 0, 6 means that the sub-block 6 is placed at a location of the sub-block 1, and 2 means that the sub-block 2 is placed at a location of the sub-block 2 (that is, remains unchanged). Details are not described herein. In this case, a codeword sequence obtained after the sub-block interleaving is {12, 17, 10}, {21, 26, 19}, {7, 5, 4}, {24, 18, 20}, {25, 23, 22}, {6, 0, 2}, {3, 8, 1}, {16, 14, 13}, and {15, 9, 11}, and a finally obtained codeword sequence (that is, the fourth codeword sequence) is {12, 17, 10, 21, 26, 19, 7, 5, 4, 24, 18, 20, 25, 23, 22, 6, 0, 2, 3, 8, 1, 16, 14, 13, 112, 9, 11}.

For example, in this application, block interleaving on the Y sub-blocks in the third codeword sequence may alternatively be implemented in the following two possible block interleaving manners. One is a column-in-row-out interleaving manner of a modulo d1, and the other is a row-in-column-out interleaving manner of a modulo d2, where both d1 and d2 are integers greater than 1 and less than Y, and d1 and d2 are fixed column quantities or fixed row quantities after writing in corresponding interleaving manners. For ease of description, the following uses d1 and d2 as fixed column quantities after writing in corresponding interleaving manners for description.
(1) Column-in-row-out interleaving manner of the modulo d1 (which may be referred to as a second interleaving manner below): The interleaving manner is used to write every $\left⌈Y/d1\right⌉$ sub-blocks in the Y sub-blocks in the third codeword sequence by column and read the Y sub-blocks by row to complete sub-block interleaving.
(2) Row-in-column-out interleaving manner of the modulo d2 (which may be referred to as a third interleaving manner below): The interleaving manner is used to write every d2 sub-blocks in the Y sub-blocks in the third codeword sequence by row and read the Y sub-blocks by column to complete sub-block interleaving.

In the foregoing technical solution, an interleaving process of the to-be-interleaved codeword sequence is divided into two steps. A first step is performing inter-sub-block bit interleaving in a small range in a sub-block group including a plurality of sub-blocks to break a correlation between consecutive bits. A second step is sub-block interleaving, and originally aggregated bit locations are distributed to different locations in a transmit sequence in a large range through block interleaving. In this case, a degree of parallelism can be improved through sub-block interleaving in a large range, and the inter-sub-block bit interleaving in a small range in a sub-block group can be obtained based on a fixed interconnection relationship, and hardware implementation is easy. In this way, a problem of irregular de-interleaving caused by small-granularity bit interleaving performed in a large range in original interleaving is resolved, the degree of parallelism cannot be improved, and hardware overheads are high.

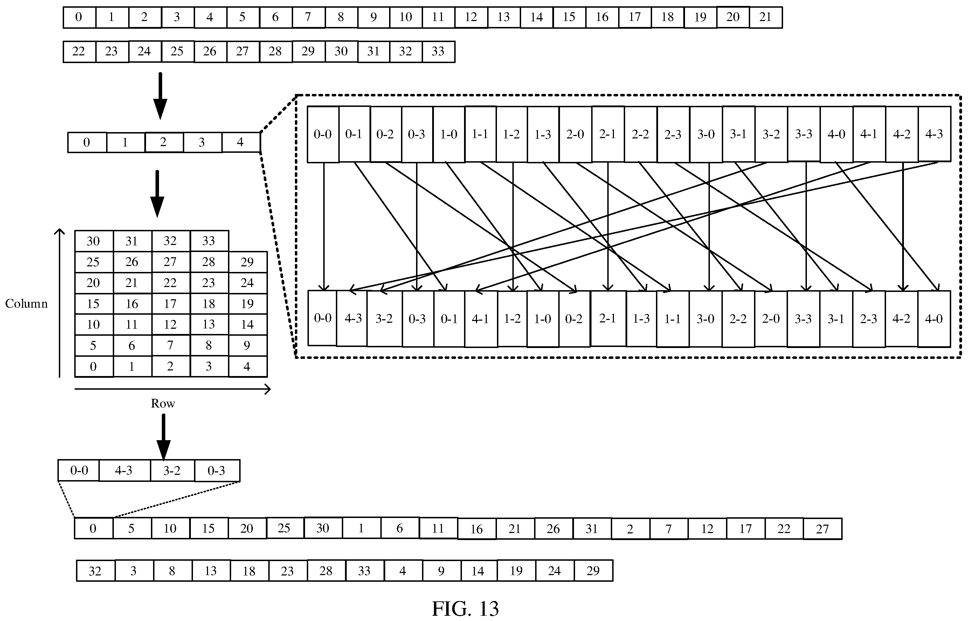

The following provides a specific example according to the method 1200 with reference to FIG. 13. As shown in FIG. 13, the to-be-interleaved codeword sequence includes Y=34 sub-blocks in total, which are a sub-block 0 to a sub-block 33, and each sub-block includes X=4 bits. As shown in FIG. 13, (1) in this example, Z=5, that is, every five consecutive sub-blocks in the 34 sub-blocks are divided to obtain L=7 sub-block groups, and inter-sub-block bit interleaving is performed on each sub-block group. In this example, all bits in each sub-block group are shifted based on locations congruent modulo 3, to implement inter-sub-block bit interleaving. An example in which inter-sub-block bit interleaving is performed on bits included in sub-blocks {0, 1, 2, 3, 4} in a first sub-block group is used for description, as shown in FIG. 13. In the sub-block group, a bit whose location index modulo 3 has a remainder of 0 is shifted by 0 sub-blocks. In the sub-block group, a bit whose location index modulo 3 has a remainder of 1 is shifted by 1 sub-block. In the sub-block group, a bit whose location index modulo 3 has a remainder of 2 is shifted by 2 sub-blocks. A method for performing inter-sub-block bit interleaving on the remaining sub-block groups is the same as the method for performing inter-sub-block bit interleaving on the first sub-block group, and details are not described herein. (2) After inter-sub-block bit interleaving is completed for all the sub-block groups, a third codeword sequence is obtained, where the third codeword sequence also includes Y sub-blocks. (3) Sub-block interleaving is performed on the Y sub-blocks in the third codeword sequence in a row-in-column-out interleaving manner of a modulo d2=5. Specifically, five sub-blocks are read in each row, that is, the sub-block 0 to the sub-block 4 are read in a first row, and the sub-block 5 to the sub-block 9 are read in the first row. The rest may be deduced by analogy. The remaining sub-blocks 30 to 33 are read in a last row. The sub-blocks {0, 5, 10, 15, 20, 25, 30} in the first column are then read, followed by the sub-blocks {1, 6, 11, 16, 21, 26, 31} in the second row. The rest may be deduced by analogy, until sub-blocks corresponding to all columns are read, to obtain a final fourth codeword sequence.

In the foregoing solution, when Eₘₐₓ=8320, and a de-interleaving throughput capability of 64 G is reached, a required ASIC circuit area is only 83% of an ASIC circuit area required by a long triangle interleaving solution in which Eₘₐₓ=8192, a throughput capability is eight times that of a triangular interleaving solution, and area efficiency is 9.6 times that of a triangular interleaving solution.

The foregoing describes in detail the interleaving method shown in the method 1200. Based on the procedure shown in FIG. 2, similarly, after obtaining the fourth codeword sequence, the transmitter performs modulation based on the codebook, and then sends a modulation symbol to the receiver for demodulation through a noisy channel. Specifically, the receiver simultaneously demodulates N bits in the symbol to obtain a to-be-de-interleaved sequence including N pieces of decoded information. Then, the receiver performs de-interleaving on the to-be-de-interleaved sequence. The following describes in detail the de-interleaving method.

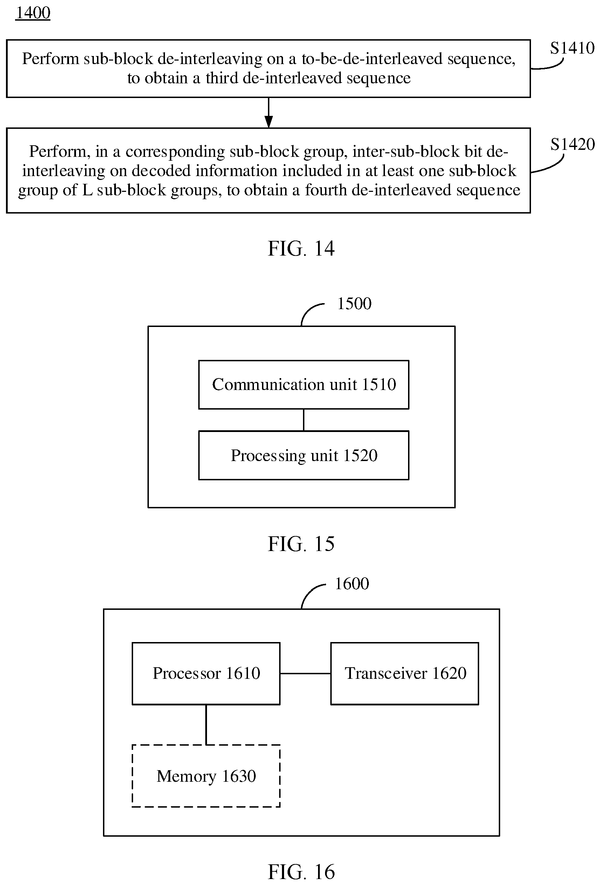

FIG. 14 is a schematic flowchart of a de-interleaving method 1400 according to this application. It may be understood that, in the de-interleaving method shown in FIG. 14, the fourth codeword sequence determined in the method 1200 is de-interleaved. Therefore, corresponding to the method 1200, the receiver needs to first perform a sub-block de-interleaving operation, and then perform a bit de-interleaving operation. The method includes the following steps.

S1410: A receiver device performs sub-block de-interleaving on a to-be-de-interleaved sequence, to obtain a third de-interleaved sequence, where both the to-be-de-interleaved sequence and the third de-interleaved sequence include Y sub-blocks, and Y sub-blocks in the to-be-de-interleaved sequence are determined based on a preset quantity X of pieces of decoded information included in one sub-block, where both X and Y are integers greater than 1.

Optionally, before sub-block de-interleaving is performed, sub-block division is performed on a to-be-de-interleaved sequence including N pieces of decoded information, and Y sub-blocks obtained by dividing the to-be-de-interleaved sequence based on a preset quantity X of pieces of decoded information included in one sub-block, where , and ┌ ┐ indicates rounding up. It should be noted that, if N cannot be exactly divided by X, a length of one of the Y sub-blocks is less than X.

Then, sub-block de-interleaving is performed on the Y sub-blocks obtained by dividing the to-be-de-interleaved sequence, to obtain a de-interleaved output sequence (namely, a third de-interleaved sequence). The third de-interleaved sequence includes Y sub-blocks.

It may be understood that values of same parameters in the de-interleaving method 1400 and the method 1200 are the same.

It may be further understood that the deblocking interleaving manner is determined based on a corresponding block interleaving manner. For example, the following describes a corresponding de-interleaving manner based on the column-in-row-out interleaving manner of the modulo d1 and the row-in-column-out interleaving manner of the modulo d2 that are provided in S1220.
(1) Second de-interleaving manner: The de-interleaving manner is a de-interleaving manner corresponding to the column-in-row-out interleaving manner of the modulo d1. The second de-interleaving manner is used to write the Y sub-blocks in the to-be-de-interleaved sequence by row and read the Y sub-blocks by column to complete sub-block de-interleaving, d1 is a quantity of written columns corresponding to the second de-interleaving manner, and a quantity of sub-blocks written in each row is determined in the column-in-row-out interleaving manner of the modulo d1.
(2) Third de-interleaving manner: The de-interleaving manner is a de-interleaving manner corresponding to the row-in-column-out interleaving manner of the modulo d2. The third de-interleaving manner is used to write the Y sub-blocks in the to-be-de-interleaved sequence by column and read the Y sub-blocks by row to complete sub-block de-interleaving, d2 is a quantity of written columns corresponding to the third de-interleaving manner, and a quantity of sub-blocks written into each column is determined in the row-in-column-out interleaving manner of the modulo d2.

S1420: The receiver device performs, in a corresponding sub-block group, inter-sub-block bit de-interleaving on decoded information included in at least one sub-block group of L sub-block groups, to obtain a fourth de-interleaved sequence, where the L sub-block groups are determined based on Y sub-blocks in the third de-interleaved sequence and a preset quantity Z of sub-blocks included in one sub-block group, and the Y sub-blocks are determined based on a preset quantity X of pieces of decoded information included in one sub-block, where both Z and L are integers greater than 1.

Optionally, before the inter-sub-block bit de-interleaving is performed, the Y sub-blocks in the third de-interleaved sequence need to be divided into sub-block groups, and based on a preset quantity Z of sub-blocks included in one sub-block group, L sub-block groups are obtained by dividing the Y sub-blocks in the third de-interleaved sequence, where L=[Y/Z]. It should be noted that if Y cannot be exactly divided by Z, a quantity of sub-blocks included in one of the L sub-block groups is less than Z.

It may be understood that the L sub-block groups in S1420 are in a one-to-one correspondence with the L sub-block groups in S1210. Specifically, a first sub-block group in the L sub-block groups in S1420 includes a plurality of pieces of corresponding decoded information obtained after a plurality of bits in the first sub-block group in the L sub-block groups in S1210 are demodulated, and the first sub-block group in S1210 and the first sub-block group in S1420 are corresponding sub-block groups.

Optionally, performing, in the corresponding sub-block group, inter-sub-block bit de-interleaving on the decoded information included in the at least one sub-block group of the L sub-block groups includes: performing, in a first sub-block group in a first de-interleaving manner, inter-sub-block bit de-interleaving on decoded information included in the first sub-block group in the at least one sub-block group, where the first sub-block group includes a first sub-block and a second sub-block, the first de-interleaving manner is used to place first decoded information included in the second sub-block at a second location, and the second location is a location of second decoded information in the first sub-block.

It may be understood that the first de-interleaving manner is an inverse operation of the first interleaving manner. In other words, the transmitter performs, in the first interleaving manner, inter-sub-block bit interleaving on the bits in the first sub-block group in S1210. In this case, the transmitter performs de-interleaving, in the first de-interleaving manner, the decoded information obtained by using the first sub-block group in S1420, that is, performs an inverse operation corresponding to an interleaving operation. Based on the descriptions in S1210, the transmitter places a first bit from the second location to a first location in the first interleaving manner. In this case, the receiver places decoded information of the first location (namely, first decoded information corresponding to the first bit) at the second location in the first de-interleaving manner during de-interleaving. Optionally, a remainder obtained after a modulo n operation is performed on a location index of the first location is the same as a remainder obtained after the modulo n operation is performed on a location index of the second location, where n is an integer greater than 1.

It may be understood that the steps in the foregoing accompanying drawings are merely examples for description, and these are not strictly limited. In addition, sequence numbers of the foregoing processes do not mean execution sequences. The execution sequences of the processes need to be determined based on functions and internal logic of the processes, and should not constitute any limitation on the implementation processes of embodiments of this application.

It may be further understood that, in some scenarios, some optional features in embodiments of this application may be independently implemented without depending on another feature. Alternatively, in some scenarios, the optional features are combined with another feature. This is not limited.

It may be further understood that, in the foregoing method embodiments, the methods and operations implemented by the device (the transmitter device or the receiver device) may alternatively be implemented by a component (for example, a chip or a circuit) of the device. This is not limited.

In correspondence to the methods provided in the foregoing method embodiments, embodiments of this application further provide a corresponding apparatus. The apparatus includes corresponding modules configured to perform the foregoing method embodiments. The modules may be software, hardware, or a combination of software and hardware. It may be understood that the technical features described in the method embodiments are also applicable to the following apparatus embodiments.

FIG. 15 is a block diagram of a communication apparatus 1500 according to an embodiment of this application. As shown in FIG. 15, the apparatus 1500 may include a communication unit 1510 and a processing unit 1520. The communication unit 1510 may communicate with the outside, and the processing unit 1520 is configured to process data. The communication unit 1510 may also be referred to as a communication interface or a transceiver unit.

In a possible design, the apparatus 1500 may implement steps or procedures performed by the transmitter device in the foregoing method embodiments. The processing unit 1520 is configured to perform processing-related operations of the transmitter device in the foregoing method embodiments, and the communication unit 1510 is configured to perform sending-related operations of the transmitter device in the foregoing method embodiments.

In another possible design, the apparatus 1500 may implement steps or procedures performed by the receiver device in the foregoing method embodiments. The communication unit 1510 is configured to perform receiving-related operations of the receiver device in the foregoing method embodiments, and the processing unit 1520 is configured to perform processing-related operations of the receiver device in the foregoing method embodiments.

It may be understood that the apparatus 1500 herein is embodied in a form of functional units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate assembly that supports the described function. In an optional example, a person skilled in the art may understand that the apparatus 1500 may specifically be the transmitter device in the foregoing embodiments, and may be configured to perform procedures and/or steps corresponding to the transmitter device in the foregoing method embodiments. Alternatively, the apparatus 1500 may specifically be the receiver device in the foregoing embodiments, and may be configured to perform procedures and/or steps corresponding to the receiver device in the foregoing method embodiments. To avoid repetition, details are not described herein again.

The apparatus 1500 in each of the foregoing solutions has functions of implementing corresponding steps performed by the transmitter device in the foregoing method, or the apparatus 1500 in each of the foregoing solutions has functions of implementing corresponding steps performed by the receiver device in the foregoing methods. The function may be implemented by hardware, or may be implemented by hardware executing corresponding software. The hardware or software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit like the processing unit may be replaced with a processor, to separately perform the sending/receiving operations and the processing-related operations in the method embodiments.

In addition, alternatively, the communication unit may be a transceiver circuit (for example, may include a receiving circuit and a sending circuit), and the processing unit may be a processing circuit. In this embodiment of this application, the apparatus in FIG. 15 may be the receiver device or the transmitter device in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 16 is a block diagram of a communication apparatus 1600 according to an embodiment of this application. The apparatus 1600 includes a processor 1610 and a transceiver 1620. The processor 1610 and the transceiver 1620 communicate with each other through an internal connection path, and the processor 1610 is configured to execute instructions, to control the transceiver 1620 to send a signal and/or receive a signal.

Optionally, the apparatus 1600 may further include a memory 1630. The memory 1630 communicates with the processor 1610 and the transceiver 1620 through an internal connection path. The memory 1630 is configured to store instructions, and the processor 1610 may execute the instructions stored in the memory 1630. In a possible implementation, the apparatus 1600 is configured to implement procedures and steps corresponding to the transmitter device in the foregoing method embodiments. In another possible implementation, the apparatus 1600 is configured to implement procedures and steps corresponding to the receiver device in the foregoing method embodiments.

It may be understood that the apparatus 1600 may be specifically the transmitter device or the receiver device in the foregoing embodiments, or may be a chip or a chip system. Correspondingly, the transceiver 1620 may be a transceiver circuit of the chip. This is not limited herein. Specifically, the apparatus 1600 may be configured to perform steps and/or procedures corresponding to the transmitter device or the receiver device in the foregoing method embodiments.

Optionally, the memory 1630 may include a read-only memory and a random access memory, and provide instructions and data for the processor. The memory may further include a non-volatile random access memory. For example, the memory may further store information of a device type. The processor 1610 may be configured to execute the instructions stored in the memory, and when the processor 1610 executes the instructions stored in the memory, the processor 1610 is configured to perform the steps and/or procedures corresponding to the transmitter device or the receiver device in the method embodiments.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information from the memory and completes the steps in the foregoing methods in combination with hardware of the processor. To avoid repetition, details are not described herein.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, digital signal processing (digital signal processing, DSP), an ASIC, a field-programmable gate array (field-programmable gate array, FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information from the memory and completes the steps in the foregoing methods in combination with hardware of the processor.

It may be understood that, in embodiments of this application, the memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

Optionally, the memory (for example, 1630) in embodiments of this application may be integrated into the processor (for example, 1610).

In addition, this application further provides a computer-readable storage medium. The computer-readable storage medium stores computer instructions, and when the computer instructions are run on a computer, the operations and/or procedures performed by the transmitter device or the receiver device in the method embodiments of this application are performed.

This application further provides a computer program product. The computer program product includes computer program code or instructions. When the computer program code or the instructions are run on a computer, the operations and/or procedures performed by the transmitter device or the receiver device in the method embodiments of this application are performed.

In addition, this application further provides a chip. The chip includes a processor. A memory configured to store a computer program is disposed independent of the chip. The processor is configured to execute the computer program stored in the memory, so that an operation and/or processing performed by the transmitter device or the receiver device in any method embodiment are/is performed.

Further, the chip may include a communication interface. The communication interface may be an input/output interface, an interface circuit, or the like. Further, the chip may include the memory.

In addition, this application further provides a communication system, including the transmitter device and the receiver device in embodiments of this application.

It should be further noted that the memory described herein is intended to include, but not limited to, these memories and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form. The units described as separate parts may or may not be physically separate, and parts displayed as units may or may not be physical units, and may be located at one location, or may be distributed on a plurality of network units. A part or all of the units may be selected based on an actual requirement to achieve the objectives of the solutions of embodiments. In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

It can be understood that an "embodiment" mentioned throughout this specification means that particular features, structures, or characteristics related to the embodiment are included in at least one embodiment of this application. Therefore, embodiments in the entire specification do not necessarily refer to a same embodiment. In addition, the particular features, structure or characteristics may be combined in one or more embodiments in any proper manner.

It may be further understood that, in this application, both "when" and "if" mean that a network element performs corresponding processing in an objective situation, but do not constitute a limitation on time, do not require that the network element has a determining action during implementation, and do not mean other limitations either.

It may be further understood that, in embodiments of this application, "B corresponding to A" indicates that B is associated with A, and B may be determined based on A. However, it may be further understood that determining B based on A does not mean that B is determined based only on A. B may alternatively be determined based on A and/or other information.

## Claims

1. An interleaving method, comprising:
performing sub-block interleaving on a to-be-interleaved codeword sequence, to obtain a first codeword sequence, wherein both the to-be-interleaved codeword sequence and the first codeword sequence comprise Y sub-blocks, and Y sub-blocks in the to-be-interleaved codeword sequence are determined based on a preset quantity X of bits comprised in one sub-block, wherein both X and Y are integers greater than 1; and
performing, in a corresponding sub-block group, inter-sub-block bit interleaving on bits comprised in at least one sub-block group of L sub-block groups, to obtain a second codeword sequence, wherein the L sub-block groups are determined based on Y sub-blocks in the first codeword sequence and a preset quantity Z of sub-blocks comprised in one sub-block group, wherein both Z and L are integers greater than 1.

2. The method according to claim 1, wherein performing, in the corresponding sub-block group, inter-sub-block bit interleaving on the bits comprised in the at least one sub-block group of the L sub-block groups comprises:
performing, in a first sub-block group in a first interleaving manner, inter-sub-block bit interleaving on bits comprised in the first sub-block group in the at least one sub-block group, wherein the first sub-block group comprises a first sub-block and a second sub-block, the first interleaving manner is used to place a first bit comprised in the first sub-block at a first location, and the first location is a location of a second bit comprised in the second sub-block.

3. The method according to claim 2, wherein a remainder obtained after a modulo n operation is performed on a location index of the first bit is the same as a remainder obtained after the modulo n operation is performed on a location index of the second bit, wherein n is an integer greater than 1.

4. The method according to any one of claims 1 to 3, wherein performing sub-block interleaving on the to-be-interleaved codeword sequence comprises:
performing sub-block interleaving on the to-be-interleaved codeword sequence in a second interleaving manner, wherein the second interleaving manner is used to write every $\left⌈Y/d1\right⌉$ sub-blocks in the Y sub-blocks in the to-be-interleaved codeword sequence by column and read the Y sub-blocks by row to complete sub-block interleaving, wherein d1 is a quantity of written columns corresponding to the second interleaving manner, d1 is an integer greater than 1 and less than Y, and ┌ ┐ indicates rounding up.

5. The method according to claim 4, wherein Z is equal to d1.

6. The method according to any one of claims 1 to 3, wherein performing sub-block interleaving on the to-be-interleaved codeword sequence comprises:
performing sub-block interleaving on the to-be-interleaved codeword sequence in a third interleaving manner, wherein the third interleaving manner is used to write every d2 sub-blocks in the Y sub-blocks in the to-be-interleaved codeword sequence by row and read the Y sub-blocks by column to complete sub-block interleaving, wherein d2 is a quantity of written columns corresponding to the third interleaving manner, and d2 is an integer greater than 1 and less than Y.

7. The method according to any one of claims 1 to 6, wherein sub-blocks comprised in any one of the L sub-block groups are consecutive sub-blocks in the Y sub-blocks in the first codeword sequence.

8. The method according to claim 6, wherein the third interleaving manner is further used to perform, in a corresponding sub-block group between row-based writing and column-based reading, sub-block interleaving on at least one sub-block group of d2 sub-block groups, and the d2 sub-block groups are sub-block groups corresponding to d2 columns of sub-blocks that are written by row.

9. The method according to claim 8, wherein the L sub-block groups are sub-block groups obtained through row-based reading after sub-block interleaving is performed in the corresponding sub-block group.

10. The method according to claim 8 or 9, wherein Z is equal to d2.

11. The method according to any one of claims 8 to 10, wherein that the third interleaving manner is used to perform, in the corresponding sub-block group, sub-block interleaving on the at least one sub-block group of the d2 sub-block groups comprises: the third interleaving manner is used to perform, in the corresponding sub-block group by translating a sub-block in a column direction, sub-block interleaving on the at least one sub-block group of the d2 sub-block groups.

12. A de-interleaving method, comprising:
performing, in a corresponding sub-block group, inter-sub-block bit de-interleaving on decoded information comprised in at least one sub-block group of L sub-block groups, to obtain a first de-interleaved sequence, wherein the L sub-block groups are determined based on Y sub-blocks in a to-be-de-interleaved sequence and a preset quantity Z of sub-blocks comprised in one sub-block group, and the Y sub-blocks are determined based on a preset quantity X of pieces of decoded information comprised in one sub-block, wherein X, Y, Z, and L are all integers greater than 1; and
performing sub-block de-interleaving on the first de-interleaved sequence, to obtain a second de-interleaved sequence.

13. The method according to claim 12, wherein performing, in the corresponding sub-block group, inter-sub-block bit de-interleaving on the decoded information comprised in the at least one sub-block group of the L sub-block groups comprises:
performing, in a first sub-block group in a first de-interleaving manner, inter-sub-block bit de-interleaving on decoded information comprised in the first sub-block group in the at least one sub-block group, wherein the first sub-block group comprises a first sub-block and a second sub-block, the first de-interleaving manner is used to place first decoded information comprised in the second sub-block at a second location, and the second location is a location of second decoded information in the first sub-block.

14. The method according to claim 13, wherein a remainder obtained after a modulo n operation is performed on a location index of the first decoded information is the same as a remainder obtained after the modulo n operation is performed on a location index of the second decoded information, wherein n is an integer greater than 1.

15. The method according to any one of claims 12 to 14, wherein performing sub-block de-interleaving on the first de-interleaved sequence comprises:
performing sub-block de-interleaving on the first de-interleaved sequence in a second de-interleaving manner, wherein the second de-interleaving manner is used to write Y sub-blocks in the first de-interleaved sequence by row and read the Y sub-blocks by column to complete sub-block de-interleaving, a quantity of written columns corresponding to the second de-interleaving manner is d1, and a quantity of sub-blocks written in each row is determined in a column-in-row-out interleaving manner of a modulo d1, wherein d1 is an integer greater than 1 and less than Y.

16. The method according to claim 15, wherein Z is equal to d1.

17. The method according to any one of claims 12 to 14, wherein performing sub-block de-interleaving on the first de-interleaved sequence comprises:
performing sub-block de-interleaving on the first de-interleaved sequence in a third de-interleaving manner, wherein the third de-interleaving manner is used to write Y sub-blocks in the first de-interleaved sequence by column and read the Y sub-blocks by row to complete sub-block de-interleaving, a quantity of columns written corresponding to the third de-interleaving manner is d2, and a quantity of sub-blocks written in each column is determined in a row-in-column-out interleaving manner of a modulo d2, wherein d2 is an integer greater than 1 and less than Y.

18. The method according to any one of claims 12 to 17, wherein sub-blocks comprised in any one of the L sub-block groups are consecutive sub-blocks in the Y sub-blocks in the to-be-de-interleaved sequence.

19. The method according to claim 17, wherein the third de-interleaving manner is further used to perform, in a corresponding sub-block group, sub-block de-interleaving on at least one sub-block group of d2 sub-block groups between column-based writing and row-based reading, and the d2 sub-block groups are sub-block groups corresponding to d2 columns of sub-blocks that are written by column.

20. The method according to claim 19, wherein the L sub-block groups are sub-block groups obtained through row-based reading before sub-block de-interleaving is performed in the corresponding sub-block group.

21. The method according to claim 19 or 20, wherein Z is equal to d2.

22. The method according to any one of claims 19 to 21, wherein that the third de-interleaving manner is used to perform, in the corresponding sub-block group, sub-block de-interleaving on the at least one sub-block group of the d2 sub-block groups comprises: the third de-interleaving manner is used to perform, in the corresponding sub-block group by translating a sub-block in a column direction, sub-block de-interleaving on the at least one sub-block group of the d2 sub-block groups.

23. An interleaving method, comprising:
performing, in a corresponding sub-block group, inter-sub-block bit interleaving on bits comprised in at least one sub-block group of L sub-block groups, to obtain a third codeword sequence, wherein the L sub-block groups are determined based on Y sub-blocks in a to-be-interleaved codeword sequence and a preset quantity Z of sub-blocks comprised in one sub-block group, and the Y sub-blocks are determined based on a preset quantity X of bits comprised in one sub-block, wherein X, Y, Z, and L are all integers greater than 1; and
performing sub-block interleaving on Y sub-blocks in the third codeword sequence to obtain a fourth codeword sequence.

24. The method according to claim 23, wherein performing, in the corresponding sub-block group, inter-sub-block bit interleaving on the bits comprised in the at least one sub-block group of the L sub-block groups comprises:
performing, in a first sub-block group in a first interleaving manner, inter-sub-block bit interleaving on bits comprised in the first sub-block group in the at least one sub-block group, wherein the first sub-block group comprises a first sub-block and a second sub-block, the first interleaving manner is used to place a first bit comprised in the first sub-block at a first location, and the first location is a location of a second bit comprised in the second sub-block.

25. The method according to claim 24, wherein a remainder obtained after a modulo n operation is performed on a location index of the first bit is the same as a remainder obtained after the modulo n operation is performed on a location index of the second bit, wherein n is an integer greater than 1.

26. The method according to any one of claims 23 to 25, wherein performing sub-block interleaving on the Y sub-blocks in the third codeword sequence comprises:
performing sub-block interleaving on the Y sub-blocks in the third codeword sequence in a third interleaving manner, wherein the third interleaving manner is used to write every d2 sub-blocks in Y sub-blocks in the third codeword sequence by row and read the Y sub-blocks by column to complete sub-block interleaving, wherein d2 is a quantity of written columns corresponding to the third interleaving manner, and d2 is an integer greater than 1 and less than Y.

27. The method according to claim 26, wherein Z is equal to d2.

28. The method according to any one of claims 23 to 25, wherein performing sub-block interleaving on the Y sub-blocks in the third codeword sequence comprises:
performing sub-block interleaving on the Y sub-blocks in the third codeword sequence in a second interleaving manner, wherein the second interleaving manner is used to write every $\left⌈Y/d1\right⌉$ sub-blocks in the Y sub-blocks in the third codeword sequence by column and read the Y sub-blocks by row to complete sub-block interleaving, wherein d1 is a quantity of written columns corresponding to the second interleaving manner, d1 is an integer greater than 1 and less than Y, and ┌ ┐ indicates rounding up.

29. The method according to any one of claims 23 to 28, wherein sub-blocks comprised in any one of the L sub-block groups are consecutive sub-blocks in the Y sub-blocks in the to-be-interleaved codeword sequence.

30. A de-interleaving method, comprising:
performing sub-block de-interleaving on a to-be-de-interleaved sequence, to obtain a third de-interleaved sequence, wherein both the to-be-de-interleaved sequence and the third de-interleaved sequence comprise Y sub-blocks, and Y sub-blocks in the to-be-de-interleaved sequence are determined based on a preset quantity X of pieces of decoded information comprised in one sub-block, wherein both X and Y are integers greater than 1; and
performing, in a corresponding sub-block group, inter-sub-block bit de-interleaving on decoded information comprised in at least one sub-block group of L sub-block groups, to obtain a fourth de-interleaved sequence, wherein the L sub-block groups are determined based on Y sub-blocks in the third de-interleaved sequence and a preset quantity Z of sub-blocks comprised in one sub-block group, and the Y sub-blocks are determined based on a preset quantity X of pieces of decoded information comprised in one sub-block, wherein both Z and L are integers greater than 1.

31. The method according to claim 30, wherein performing, in the corresponding sub-block group, inter-sub-block bit de-interleaving on the decoded information comprised in the at least one sub-block group of the L sub-block groups comprises:
performing, in a first sub-block group in a first de-interleaving manner, inter-sub-block bit de-interleaving on decoded information comprised in the first sub-block group in the at least one sub-block group, wherein the first sub-block group comprises a first sub-block and a second sub-block, the first de-interleaving manner is used to place first decoded information comprised in the second sub-block at a second location, and the second location is a location of second decoded information in the first sub-block.

32. The method according to claim 31, wherein a remainder obtained after a modulo n operation is performed on a location index of the first decoded information is the same as a remainder obtained after the modulo n operation is performed on a location index of the second decoded information, wherein n is an integer greater than 1.

33. The method according to any one of claims 30 to 32, wherein performing sub-block de-interleaving on the to-be-de-interleaved sequence comprises:
performing sub-block de-interleaving on the to-be-de-interleaved sequence in a third de-interleaving manner, wherein the third de-interleaving manner is used to write the Y sub-blocks in the to-be-de-interleaved sequence by column and read the Y sub-blocks by row to complete sub-block de-interleaving, a quantity of columns written corresponding to the third de-interleaving manner is d2, and a quantity of sub-blocks written in each column is determined in a row-in-column-out interleaving manner of a modulo d2.

34. The method according to claim 33, wherein Z is equal to d2.

35. The method according to any one of claims 30 to 32, wherein performing sub-block de-interleaving on the to-be-de-interleaved sequence comprises:
performing sub-block de-interleaving on the to-be-de-interleaved sequence in a second de-interleaving manner, wherein the second de-interleaving manner is used to write the Y sub-blocks in the to-be-de-interleaved sequence by row and read the Y sub-blocks by column to complete sub-block de-interleaving, a quantity of written columns corresponding to the second de-interleaving manner is d1, and a quantity of sub-blocks written in each row is determined in a column-in-row-out interleaving manner of a modulo d1, wherein d1 is an integer greater than 1 and less than Y

36. The method according to any one of claims 30 to 35, wherein sub-blocks comprised in any one of the L sub-block groups are consecutive sub-blocks in the Y sub-blocks in the third de-interleaved sequence.

37. A communication apparatus, comprising:
a processor, configured to execute a computer program or instructions stored in a memory, wherein
the memory is configured to store the computer program or the instructions; and
when the computer program or the instructions are run, the method according to any one of claims 1 to 11 is performed, the method according to any one of claims 12 to 22 is performed, or the method according to any one of claims 23 to 29 is performed, or the method according to any one of claims 30 to 36 is performed.

38. A computer program product, wherein the computer program product comprises instructions used to perform the method according to any one of claims 1 to **11,** or the computer program product comprises instructions used to perform the method according to any one of claims 12 to 22, or the computer program product comprises instructions used to perform the method according to any one of claims 23 to 29, or the computer program product comprises instructions used to perform the method according to any one of claims 30 to 36.

39. A computer-readable storage medium, wherein the computer-readable storage medium stores a computer program or instructions, and when the computer program or the instructions are run on a computer, the method according to any one of claims 1 to **11** is performed, or the method according to any one of claims 12 to 22 is performed, or the method according to any one of claims 23 to 29 is performed, or the method according to any one of claims 30 to 36 is performed.
